(19) Europäisches Patentamt
European Patent Office
Office européen des brevets

(11) **EP 2 579 206 A1**

(12) **EUROPEAN PATENT APPLICATION**
published in accordance with Art. 153(4) EPC

(43) Date of publication:
**10.04.2013 Bulletin 2013/15**

(51) Int Cl.:
**G06T 3/40** (2006.01)    **H04N 1/387** (2006.01)
**H04N 5/225** (2006.01)    **H04N 9/07** (2006.01)

(21) Application number: **11786460.3**

(22) Date of filing: **02.05.2011**

(86) International application number:
**PCT/JP2011/060501**

(87) International publication number:
**WO 2011/148760 (01.12.2011 Gazette 2011/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.05.2010 JP 2010120325**

(71) Applicant: **Olympus Corporation
Shibuya-ku
Tokyo 151-0072 (JP)**

(72) Inventor: **IMADE, Shinichi
Shibuya-ku, Tokyo 151-0072 (JP)**

(74) Representative: **Gunzelmann, Rainer
Wuesthoff & Wuesthoff
Patent- und Rechtsanwälte
Schweigerstraße 2
81541 München (DE)**

(54) **IMAGE PROCESSING DEVICE, IMAGE CAPTURING DEVICE, PROGRAM AND IMAGE PROCESSING METHOD**

(57)    An image processing device, an imaging device, a program, an image processing method, and the like can acquire a high-resolution image from a low-resolution movie using a simple process. The image processing device includes a storage section, an interpolation section, an estimation calculation section, and an image output section. A low-resolution frame image is acquired by reading light-receiving values ($a_{-2,-2}$ to $a_{22}$) of light-receiving units. The storage section stores the low-resolution frame image. The interpolation section calculates light-receiving values ($a_{10}$, $a_{01}$, and $a_{11}$) of virtual light-receiving units by an interpolation process based on the light-receiving values ($a_{-2,-2}$ to $a_{22}$). The estimation calculation section estimates estimated pixel values at a pixel pitch smaller than that of the low-resolution frame image based on the light-receiving value ($a_{00}$) of the light-receiving unit and the light-receiving values ($a_{10}$, $a_{01}$, and $a_{11}$) of the virtual light-receiving units. The image output section outputs a high-resolution frame image having a resolution higher than that of the low-resolution frame image based on the estimated pixel values.

FIG. 1

**EP 2 579 206 A1**

**Description**

TECHNICAL FIELD

The present invention relates to an image processing device, an imaging device, a program, an image processing method, and the like.

BACKGROUND ART

A digital camera or a video camera may be designed so that the user can select a still image shooting mode or a movie shooting mode. For example, a digital camera or a video camera may be designed so that the user can shoot a still image having a resolution higher than that of a movie by operating a button when shooting a movie.

RELATED-ART DOCUMENT

PATENT DOCUMENT

Patent Document 1: JP-A-2009-124621
Patent Document 2: JP-A-2008-243037

SUMMARY OF THE INVENTION

TECHNICAL PROBLEM

However, when the user selects the still image shooting mode or the movie shooting mode, the user may have missed the best moment when the user has become aware that it is possible to take the best shot.
The inventor of the invention proposes generating a high-resolution still image at an arbitrary timing from a low-resolution movie in order to shoot the best moment. Patent Documents 1 and 2 disclose a method that generates (synthesizes) a high-resolution image from low-resolution images acquired using a pixel shift method, for example. According to the method disclosed in Patent Documents 1 and 2, however, a camera having a complex configuration is required to shoot low-resolution images using the pixel shift method. Moreover, the processing load when generating a high-resolution image may increase, or it may be difficult to estimate the pixel value.
Several aspects of the invention may provide an image processing device, an imaging device, a program, an image processing method, and the like that can acquire a high-resolution image from a low-resolution movie using a simple process.

SOLUTION TO PROBLEM

According to one aspect of the invention, there is provided an image processing device comprising:

a storage section that stores a low-resolution frame image being acquired by reading light-receiving values of light-receiving units, the light-receiving units being units for acquiring the light-receiving values and set on an image sensor;
an interpolation section that calculates light-receiving values of virtual light-receiving units by an interpolation process based on the light-receiving values of the light-receiving units of the low-resolution frame image, the virtual light-receiving units being set to overlap a corresponding light-receiving unit and being shifted from a position of the corresponding light-receiving unit;
an estimation calculation section that estimates estimated pixel values at a pixel pitch smaller than that of the low-resolution frame image based on the light-receiving value of the corresponding light-receiving unit and the light-receiving values of the virtual light-receiving units; and
an image output section that outputs a high-resolution frame image having a resolution higher than that of the low-resolution frame image based on the estimated pixel values estimated by the estimation calculation section.

According to this aspect of the invention, the light-receiving values of the virtual light-receiving units are calculated by the interpolation process based on the light-receiving values of the light-receiving units. The estimated pixel values at a pixel pitch smaller than that of the low-resolution frame image are estimated based on the light-receiving values of the virtual light-receiving units and the light-receiving value of the corresponding light-receiving unit. A high-resolution frame image having a resolution higher than that of the low-resolution frame image is output based on the estimated pixel values. This makes it possible to acquire a high-resolution image from a low-resolution movie using a simple process, for example.

In the image processing device,
the estimation calculation section may calculate a difference between the light-receiving value of a first light-receiving unit and the light-receiving value of a second light-receiving unit, and may estimate the estimated pixel values based on the difference, the first light-receiving unit being the corresponding light-receiving unit or a virtual light-receiving unit among the virtual light-receiving units that is set at a first position, and the second light-receiving unit being a virtual light-receiving unit among the virtual light-receiving units that is set at a second position and overlaps the first light-receiving unit.

It is possible to estimate the estimated pixel values based on the light-receiving value of the corresponding light-receiving unit and the light-receiving values of the virtual light-receiving units by thus estimating the estimated pixel values based on the difference between the light-receiving value of the first light-receiving unit and the light-receiving value of the second light-receiving unit.

In the image processing device,
the estimation calculation section may express a relational expression of a first intermediate pixel value and a second intermediate pixel value using the difference, the first intermediate pixel value being the light-receiving value of a first light-receiving area that is obtained by removing an overlapping area from the first light-receiving unit, and the second intermediate pixel value being the light-receiving value of a second light-receiving area that is obtained by removing the overlapping area from the second light-receiving unit, and
the estimation calculation section may estimate the first intermediate pixel value and the second intermediate pixel value using the relational expression, and may calculate the estimated pixel values using the estimated first intermediate pixel value.

According to this configuration, the relational expression of the first intermediate pixel value and the second intermediate pixel value is expressed using the difference, the first intermediate pixel value and the second intermediate pixel value are estimated based on the relational expression, and the estimated pixel values are estimated based on the first intermediate pixel value. This makes it possible to estimate the estimated pixel values based on the difference between the light-receiving value of the first light-receiving unit and the light-receiving value of the second light-receiving unit.

In the image processing device,
the estimation calculation section may express a relational expression of intermediate pixel values included in an intermediate pixel value pattern using the light-receiving value of the corresponding light-receiving unit and the light-receiving values of the virtual light-receiving units, the intermediate pixel value pattern including consecutive intermediate pixel values that include the first intermediate pixel value and the second intermediate pixel value,
the estimation calculation section may compare the intermediate pixel value pattern expressed by the relational expression and a light-receiving value pattern expressed using the light-receiving value of the corresponding light-receiving unit and the light-receiving values of the virtual light-receiving units to evaluate similarity, and
the estimation calculation section may determine the intermediate pixel values included in the intermediate pixel value pattern based on a similarity evaluation result so that the similarity becomes a maximum.

It is possible to determine the intermediate pixel values based on the relational expression of the intermediate pixel values by thus comparing the intermediate pixel value pattern and the light-receiving value pattern to evaluate the similarity, and determining the intermediate pixel values included in the intermediate pixel value pattern so that the similarity becomes a maximum.

In the image processing device,
the estimation calculation section may calculate an evaluation function that indicates an error between the intermediate pixel value pattern expressed by the relational expression and the light-receiving value pattern, and may determine the intermediate pixel values included in the intermediate pixel value pattern so that a value of the evaluation function becomes a minimum.

The similarity between the intermediate pixel value pattern and the light-receiving value pattern can be evaluated by thus calculating the evaluation function. It is also possible to determine the intermediate pixel values so that the similarity becomes a maximum by determining the intermediate pixel values so that the value of the evaluation function becomes a minimum.

In the image processing device,
the interpolation section may calculate a weighted sum of the light-receiving values of a plurality of light-receiving units that are included in the low-resolution frame image and positioned around each of the virtual light-receiving units to calculate the light-receiving values of the virtual light-receiving units.

This makes it possible to calculate the light-receiving values of the virtual light-receiving units by the interpolation process based on the light-receiving value of the light-receiving unit of the low-resolution frame image.

In the image processing device,
the light-receiving units may be set to include a plurality of pixels of the image sensor, pixel values of the plurality of pixels respectively included in the light-receiving units may be summed up, and read as the light-receiving values of the light-receiving units, and
the estimation calculation section may estimate the pixel values of the plurality of pixels respectively included in the light-receiving units based on the light-receiving values of the light-receiving units.

This makes it possible to estimate the pixel value of each pixel of the light-receiving unit based on the light-receiving value of the light-receiving unit obtained by the addition readout process.

In the image processing device,
the light-receiving units may be set to include a plurality of pixels of the image sensor, pixel values of the plurality of pixels respectively included in the light-receiving units may be summed up with weighting, and read as the light-receiving values of the light-receiving units, and
the estimation calculation section may estimate the pixel values of the plurality of pixels respectively included in the light-receiving units based on the light-receiving values of the light-receiving units.

This makes it possible to estimate the pixel value of each pixel of the light-receiving unit based on the light-receiving value of the light-receiving unit obtained by the weighted summation readout process.

In the image processing device,
the image sensor may be a color image sensor, a plurality of pixels adjacent to each other may be set as the light-receiving units independently of a color of each pixel, pixel values of the plurality of pixels set as the light-receiving units may be summed up, and read to acquire the low-resolution frame image,
the estimation calculation section may estimate the pixel values of each pixel of the light-receiving units based on the light-receiving values of the light-receiving units of the low-resolution frame image and the light-receiving values of the virtual light-receiving units output from the interpolation section, and
the image output section may output a high-resolution color frame image based on the pixel values estimated by the estimation calculation section.

In the image processing device,
the image sensor may be a color image sensor, a plurality of pixels in an identical color may be set as the light-receiving units, pixel values of the plurality of pixels set as the light-receiving units may be summed up, and read to acquire the low-resolution frame image,
the estimation calculation section may estimate the pixel value of each pixels of the light-receiving units based on the light-receiving values of the light-receiving units of the low-resolution frame image and the light-receiving values of the virtual light-receiving units output from the interpolation section, and
the image output section may output a high-resolution color frame image based on the pixel values estimated by the estimation calculation section.

This makes it possible to estimate the estimated pixel values from the low-resolution frame image acquired by the color image sensor, and output a high-resolution color frame image.

In the image processing device,
the light-receiving units may be set to include $N \times N$ pixels, pixel values of the $N \times N$ pixels may be summed up, and read to acquire the light-receiving value of each $N \times N$-pixel light-receiving unit,
the interpolation section may calculate the light-receiving value of each $N \times N$-pixel virtual light-receiving unit shifted by $N/2$ pixels with respect to each $N \times N$-pixel light-receiving unit by performing the interpolation process,
the estimation calculation section may estimate the light-receiving value of each $N/2 \times N/2$-pixel light-receiving unit based on the light-receiving value of each $N \times N$-pixel light-receiving unit and the light-receiving value of each $N \times N$-pixel virtual light-receiving unit,
the interpolation section may calculate the light-receiving value of each $N/2 \times N/2$-pixel virtual light-receiving unit shifted by $N/4$ pixels with respect to each $N/2 \times N/2$-pixel light-receiving unit by performing the interpolation process, and
the estimation calculation section may estimate the light-receiving value of each $N/4 \times N/4$-pixel light-receiving unit based on the light-receiving value of each $N/2 \times N/2$-pixel light-receiving unit and the light-receiving value of each $N/2 \times N/2$-pixel virtual light-receiving unit.

This makes it possible to estimate the light-receiving value of the $N/2 \times N/2$-pixel light-receiving unit from the light-receiving value of the $N \times N$-pixel light-receiving unit, and estimate the light-receiving value of the $N/4 \times N/4$-pixel light-receiving unit from the light-receiving value of the $N/2 \times N/2$-pixel light-receiving unit. This makes it possible to estimate the estimated pixel values by sequentially repeating the estimation process.

In the image processing device,
a pixel shift process that shifts the light-receiving units so that overlap occurs may be performed in each frame, the corresponding light-receiving unit may be sequentially set at a plurality of positions by the pixel shift process, and set at an identical position at intervals of a plurality of frames,

the interpolation section may calculate the light-receiving values of the virtual light-receiving units in each frame by the interpolation process based on the low-resolution frame image acquired in each frame,

the estimation calculation section may estimate the estimated pixel values in each frame based on the light-receiving value of the corresponding light-receiving unit and the light-receiving values of the virtual light-receiving units, and

the image output section may calculate a frame image in each frame based on the estimated pixel values, and may synthesize the frame images in the plurality of frames to output the high-resolution frame image.

This makes it possible to estimate the estimated pixel values in each frame based on the light-receiving value of the light-receiving unit that is subjected to the pixel shift process in each frame to calculate the frame images, and synthesize the frame images to output the high-resolution frame image.

In the image processing device,

the image output section may perform a resolution conversion process on the high-resolution frame image to output a High-Vision movie, or may output the high-resolution frame image as a high-resolution still image.

This makes it possible to output a High-Vision movie or a high-resolution still image based on the high-resolution frame image.

According to another aspect of the invention, there is provided an imaging device comprising:

an image sensor;

a readout control section that acquires a low-resolution frame image by reading light-receiving values of light-receiving units, the light-receiving units being units for acquiring the light-receiving values and set on the image sensor;

a storage section that stores the low-resolution frame image acquired by the readout control section;

an interpolation section that calculates light-receiving values of virtual light-receiving units by an interpolation process based on the light-receiving values of the light-receiving units of the low-resolution frame image, the virtual light-receiving units being set to overlap a corresponding light-receiving unit and being shifted from a position of the corresponding light-receiving unit;

an estimation calculation section that estimates estimated pixel values at a pixel pitch smaller than that of the low-resolution frame image based on the light-receiving value of the corresponding light-receiving unit and the light-receiving values of the virtual light-receiving units; and

an image output section that outputs a high-resolution frame image having a resolution higher than that of the low-resolution frame image based on the estimated pixel values estimated by the estimation calculation section.

The imaging device may further comprise:

a display section; and

a display control section that displays an image on the display section,

the image output section may perform a resolution conversion process on the high-resolution frame image to output a High-Vision movie, or may output the high-resolution frame image as a high-resolution still image, and

the display control section may display a movie that includes the low-resolution frame image, displaying the High-Vision movie, and may display the high-resolution still image.

According to another aspect of the invention, there is provided a program that causes a computer to function as:

a storage section that stores a low-resolution frame image being acquired by reading light-receiving values of light-receiving units, the light-receiving units being units for acquiring the light-receiving values and set on an image sensor;

an interpolation section that calculates light-receiving values of virtual light-receiving units by an interpolation process based on the light-receiving values of the light-receiving units of the low-resolution frame image, the virtual light-receiving units being set to overlap a corresponding light-receiving unit and being shifted from a position of the corresponding light-receiving unit;

an estimation calculation section that estimates estimated pixel values at a pixel pitch smaller than that of the low-resolution frame image based on the light-receiving value of the corresponding light-receiving unit and the light-receiving values of the virtual light-receiving units; and

an image output section that outputs a high-resolution frame image having a resolution higher than that of the low-resolution frame image based on the estimated pixel values estimated by the estimation calculation section.

According to another aspect of the invention, there is provided an image processing method comprising:

storing a low-resolution frame image being acquired by reading light-receiving values of light-receiving units, the light-receiving units being units for acquiring the light-receiving values and set on an image sensor;

calculating light-receiving values of virtual light-receiving units by an interpolation process based on the light-receiving values of the light-receiving units of the low-resolution frame image, the virtual light-receiving units being set to overlap a corresponding light-receiving unit and being shifted from a position of the corresponding light-receiving unit; estimating estimated pixel values at a pixel pitch smaller than that of the low-resolution frame image based on the light-receiving value of the corresponding light-receiving unit and the light-receiving values of the virtual light-receiving units; and

outputting a high-resolution frame image having a resolution higher than that of the low-resolution frame image based on the estimated pixel values.

BRIEF DESCRIPTION OF DRAWINGS

FIG. 1 is a view illustrating a light-receiving value interpolation method.
FIGS. 2A and 2B are views illustrating an estimation block and a light-receiving unit.
FIGS. 3A and 3B are views illustrating an estimated pixel value and an intermediate pixel value.
FIG. 4 is a view illustrating a first estimated pixel value estimation method.
FIG. 5 is a view illustrating a first estimated pixel value estimation method.
FIG. 6 is a view illustrating a first estimated pixel value estimation method.
FIGS. 7A and 7B are views illustrating an intermediate pixel value and an estimated pixel value.
FIG. 8 is a view illustrating a first estimated pixel value estimation method.
FIG. 9 is a view illustrating a first estimated pixel value estimation method.
FIG. 10 is a view illustrating a first estimated pixel value estimation method.
FIG. 11 illustrates a first configuration example of an imaging device and an image processing device.
FIG. 12 is a view illustrating an interpolation method when shooting a movie.
FIG. 13 is a view illustrating a second estimated pixel value estimation method.
FIGS. 14A and 14B are views illustrating a fourth estimated pixel value estimation method.
FIG. 15 is a view illustrating a third estimated pixel value estimation method.
FIG. 16 is a view illustrating a third estimated pixel value estimation method.
FIGS. 17A and 17B are views illustrating a third estimated pixel value estimation method.
FIG. 18 is a view illustrating a data compression/decompression process and an estimation process.
FIG. 19 is a view illustrating a data compression/decompression process and an estimation process.
FIG. 20 illustrates a second configuration example of an imaging device and an image processing device.
FIG. 21 is a view illustrating a fourth estimated pixel value estimation method.
FIGS. 22A and 22B are views illustrating a fourth estimated pixel value estimation method.
FIG. 23 is a view illustrating a fourth estimated pixel value estimation method.
FIG. 24 is a view illustrating a fourth estimated pixel value estimation method.
FIG. 25 is a view illustrating a fourth estimated pixel value estimation method.
FIG. 26 is a view illustrating a fourth estimated pixel value estimation method.
FIG. 27 is a view illustrating a fourth estimated pixel value estimation method.
FIG. 28 is a view illustrating a fourth estimated pixel value estimation method.
FIG. 29 is a flowchart illustrating a fifth estimated pixel value estimation method.
FIG. 30 is a view illustrating a sixth estimated pixel value estimation method.
FIG. 31 is a flowchart illustrating a sixth estimated pixel value estimation method.
FIGS. 32A and 32B are views illustrating a seventh estimated pixel value estimation method.
FIG. 33 illustrates a third configuration example of an imaging device and an image processing device.

DESCRIPTION OF EMBODIMENTS

Exemplary embodiments of the invention are described in detail below. Note that the following exemplary embodiments do not in any way limit the scope of the invention defined by the claims laid out herein. Note also that all of the elements described in connection with the following exemplary embodiments should not necessarily be taken as essential elements of the invention.

1. Comparative example

A comparative example is described below. A digital camera that is mainly used to shoot a still image may also have a movie shooting function, or a video camera that is mainly used to shoot a movie may also have a still image shooting function. Such a camera is normally designed so that the user selects a still image shooting mode or a movie shooting mode. A camera that allows the user to shoot a high-resolution still image at a high frame rate almost equal to that of a movie has been known. The user can perform high-speed continuous shooting using such a camera. These cameras are convenient to the user since the user can shoot a still image and a movie using a single camera.

However, the above method has a problem in that it is difficult for many users to shoot a high-quality still image without missing the best shot. For example, when using a method that instantaneously changes the shooting mode to a high-quality still image shooting mode when shooting a movie, the movie may be interrupted, or the user may have missed the best moment when the user has become aware that it is possible to take the best shot. Since the above method requires that the user have considerable skill, a method has been desired that allows the user to generate an arbitrary image as a high-resolution image while shooting a movie, or allows the user to extract a high-resolution image from a roughly shot movie, and select the desired composition.

In order to prevent a situation in which the user misses the best shot, each scene may be shot as a movie, and the best moment may be arbitrarily acquired (captured) from the movie as a high-quality still image. When implementing such a method, it is necessary to shoot a high-resolution image at a high frame rate.

However, it is difficult to shoot a high-resolution image at a high frame rate. For example, it is necessary to use an image sensor that can implement ultrafast imaging, a processing circuit that processes image data at an ultrahigh speed, an ultrahigh-speed data compression function, and a recording means that can record a huge amount of data in order to successfully shoot 12-megapixel images at a frame rate of 60 frames per second (fps). In this case, it is necessary to employ a plurality of image sensors, parallel processing, a large-capacity memory, a high-performance heat dissipation mechanism, and the like. However, these means are not realistic for consumer products for which a reduction in size and cost is desired. It may be possible to obtain a low-quality still image having a resolution almost equal to that of a High-Vision movie (2 Mpixels). However, a resolution almost equal to that of a High-Vision movie is not sufficient for a still image.

A movie may be shot at a high frame rate by utilizing a high-resolution image sensor that can capture a high-resolution image, and reducing the resolution of the image by performing a pixel thin-out readout process or an adjacent pixel addition readout process to reduce the amount of data read at one time. However, it is impossible to shoot a high-resolution image at a high frame rate using such a method.

In order to solve the above problem, it is necessary to obtain a high-resolution image from low-resolution images that have been shot at a high frame rate. A high-resolution image may be obtained from low-resolution images by performing a super-resolution process on low-resolution images that have been shot while shifting each pixel to generate a high-resolution image, for example.

According to this method, however, a camera having a complex configuration is required since it is necessary to mechanically shift the sensor, or it is necessary to perform an addition readout process while shifting each pixel. Moreover, the processing load increases due to the super-resolution process.

For example, a method that utilizes an addition readout process may be used to implement the super-resolution process that utilizes the pixel shift method. More specifically, a plurality of low-resolution images are sequentially read while performing a position shift process, and a high-resolution image is estimated based on the plurality of low-resolution images that are shifted in position. A low-resolution image is generated by causing the estimated high-resolution image to deteriorate, and is compared with the original low-resolution image. The high-resolution image is modified so that the difference between the generated low-resolution image and the original low-resolution image becomes a minimum to estimate a high-resolution image. The maximum-likelihood (ML) technique, the maximum a posteriori (MAP) technique, the projection onto convex sets (POCS) technique, the iterative back projection (IBP) technique, and the like are known as a technique that implements the super-resolution process.

The method disclosed in Patent Document 1 utilizes the super-resolution process. According to the method disclosed in Patent Document 1, low-resolution images are sequentially shot in time series while shifting each pixel when shooting a movie, and are synthesized to estimate a high-resolution image. The super-resolution process is performed on the estimated high-resolution image to estimate a high-resolution image with high likelihood.

However, the method disclosed in Patent Document 1 utilizes a general super-resolution process that increases the estimation accuracy by repeating calculations that require heavy use of a two-dimensional filter. Therefore, it is difficult to apply the method disclosed in Patent Document 1 to a product that is limited in terms of processing capacity and cost due to an increase in the amount of processing or an increase in processing time. For example, since the scale of a processing circuit necessarily increases when applying the method disclosed in Patent Document 1 to a small portable imaging device such as a digital camera, an increase in power consumption, generation of a large amount of heat, a significant increase in cost, and the like occur.

The method disclosed in Patent Document 2 generates a high-resolution image using a plurality of low-resolution images obtained while shifting each pixel. The method disclosed in Patent Document 2 estimates the pixel value of a sub-pixel (i.e., a pixel of the desired high-resolution image) so that the average value of the pixel values of the sub-pixels coincides with the pixel value of the low-resolution image. The pixel value is estimated by setting the initial value of a plurality of sub-pixels, subtracting the pixel value of each sub-pixel other than the calculation target sub-pixel from the pixel value of the low-resolution image to calculate a pixel value, and sequentially applying the calculated pixel value to the adjacent pixels.

However, the method disclosed in Patent Document 2 has a problem in that an estimation error increases to a large extent when the initial value is not successfully specified. In the method disclosed in Patent Document 2, an area in which a change in pixel value of the sub-pixels is small and the average value of the pixel values of the sub-pixels is almost equal to the pixel value of the pixel of the low-resolution image that covers the sub-pixels is found from the image when setting the initial value. Therefore, it is difficult to estimate the initial value when an area appropriate for setting the initial value cannot be found from the image. Moreover, the method disclosed in Patent Document 2 requires a process that searches for an area appropriate for setting the initial value.

2. Light-receiving value interpolation method

According to several embodiments of the invention, a low-resolution frame image is acquired by an imaging operation, pixel-shifted low-resolution frame images are virtually calculated based on the low-resolution frame image using an interpolation process, and a high-resolution frame image is estimated from the pixel-shifted low-resolution frame images using a simple estimation process.

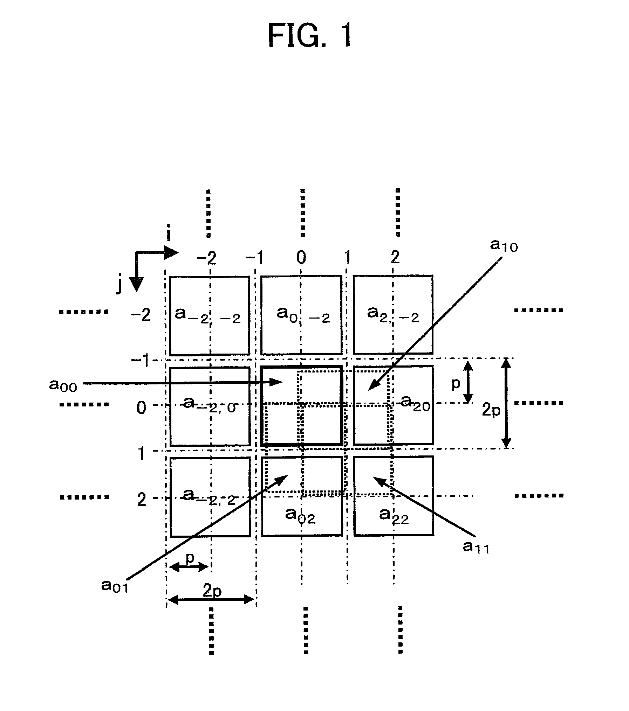

A method that calculates the pixel-shifted low-resolution frame image using the interpolation process is described below with reference to FIG. 1. Note that a light-receiving value (pixel value) acquired by the imaging operation is the light-receiving value of a light-receiving unit (light-receiving value acquisition unit), and a light-receiving value calculated by the interpolation process is the light-receiving value of a virtual light-receiving unit (interpolated light-receiving unit). The following description illustrates an example in which the light-receiving value of the light-receiving unit is a 4-pixel sum value. Note that another configuration may also be employed. For example, the light-receiving value of the light-receiving unit may be the pixel value of one pixel, or may be a 9-pixel sum value.

As illustrated in FIG. 1, light-receiving values $a_{-2,-2}$, $a_{0,-2}$, ..., and $a_{22}$ (indicated by a square solid line) of light-receiving units that form a low-resolution frame image are acquired by the imaging operation. More specifically, the light-receiving units are set on a four pixel (one pixel or multiple pixel) basis of the image sensor, and the pixel values of the pixels included in each light-receiving unit are summed up or summed up using the weight-adjusted sum, and read to acquire the light-receiving value. When the pixel pitch of the image sensor is referred to as p, the pitch of the light-receiving units is 2p.

Next, three overlap-shifted low-resolution frame images (hereinafter referred to as "shifted images") are calculated from the low-resolution frame image by performing an intra-frame interpolation process. More specifically, a first shifted image that is shifted by the pitch p in the horizontal direction with respect to the low-resolution frame image, a second shifted image that is shifted by the pitch p in the vertical direction with respect to the low-resolution frame image, and a third shifted image that is shifted by the pitch p in the horizontal direction and the vertical direction with respect to the low-resolution frame image, are calculated. The shift amount corresponds to the shift amount on the image sensor on the assumption that the shifted image is actually captured by the image sensor.

As illustrated in FIG. 1, light-receiving values $a_{10}$, $a_{01}$, and $a_{11}$ (indicated by a square dotted line) of three virtual light-receiving units that are positioned to overlap the acquired light-receiving value $a_{00}$ respectively form the first to third shifted images. Each virtual light-receiving unit is set on a four pixel basis in the same manner as each light-receiving unit. The light-receiving values $a_{10}$, $a_{01}$, and $a_{11}$ are estimated from the light-receiving values of the light-receiving units positioned around each virtual light-receiving unit. For example, the light-receiving values $a_{10}$, $a_{01}$, and $a_{11}$ are estimated by multiplying the light-receiving values of the light-receiving units positioned around each virtual light-receiving unit by weighting coefficients $w_0$, $w_1$, and $w_2$ (interpolation estimation) (see the following expression (1)).

$$a_{00} = (\text{known (acquired) value}),$$

$$a_{10} = (w_1 \cdot a_{0,-2} + w_1 \cdot a_{2,-2}) + (w_0 \cdot a_{00} + w_0 \cdot a_{20}) + (w_1 \cdot a_{02} + w_1 \cdot a_{22}),$$

$$a_{01} = (w_1 \cdot a_{-2,0} + w_1 \cdot a_{-2,2}) + (w_0 \cdot a_{00} + w_0 \cdot a_{02}) + (w_1 \cdot a_{20} + w_1 \cdot a_{22}),$$

$$a_{11} = (w_2 \cdot a_{00} + w_2 \cdot a_{20} + w_2 \cdot a_{02} + w_2 \cdot a_{22}) \tag{1}$$

Note that the interpolation process is not limited to the above interpolation process. Various other interpolation processes may also be applied. For example, the weighting coefficients $w_0$, $w_1$, and $w_2$ may be set using the concept of a Bayer interpolation method, a pixel defect correction method, or the like. A high-resolution estimated image may be generated by performing the process shown by the expression (1) on a number of high-resolution image samples while changing the weighting coefficients $w_0$, $w_1$, and $w_2$ to determine weighting coefficients $w_0$, $w_1$, and $w_2$ that minimize the total error in pixel value between the image sample and the estimated image, and the weighting coefficients $w_0$, $w_1$, and $w_2$ thus determined may be used for the estimation process.

3. First estimated pixel value estimation method

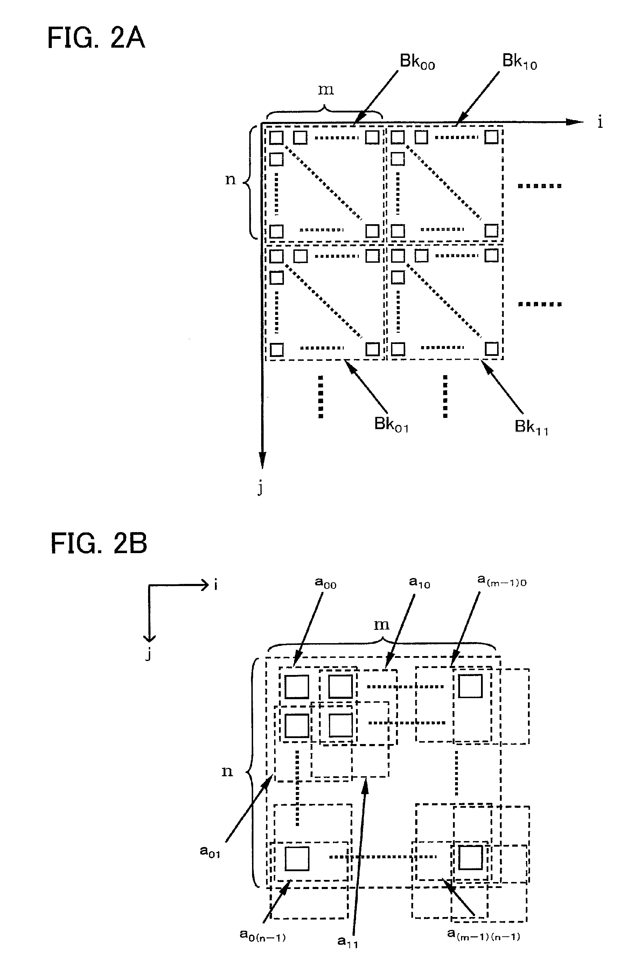

A method that estimates the high-resolution frame image from the low-resolution frame image is described below with reference to FIGS. 2A to 10. In one embodiment of the invention, four low-resolution frame images that are overlap-shifted by the pixel pitch p and include 4-pixel sum values are used to estimate a high-resolution frame image that has a number of pixels four times that of each low-resolution frame image.

FIGS. 2A and 2B are schematic views illustrating an estimation block and a light-receiving unit used for a pixel estimation process. In FIGS. 2A and 2B, each estimated pixel of which the pixel value is calculated by the estimation process is indicated by a square solid line, the pixel position in the horizontal direction (horizontal scan direction) is indicated by i, and the pixel position in the vertical direction is indicated by j (i and j are integers).

As illustrated in FIG. 2A, estimation blocks $Bk_{00}$, $Bk_{10}$, ... are set so that each estimation block includes $m \times n$ pixels. In one embodiment of the invention, the pixel values of the high-resolution image are estimated on an estimation block basis. FIG. 2B schematically illustrates one estimation block. The light-receiving values $a_{00}$ to $a_{(m-1)(n-1)}$ illustrated in FIG. 2B include the light-receiving values of the low-resolution frame image acquired by the imaging operation, and the light-receiving values of the first to third shifted images calculated by the interpolation process.

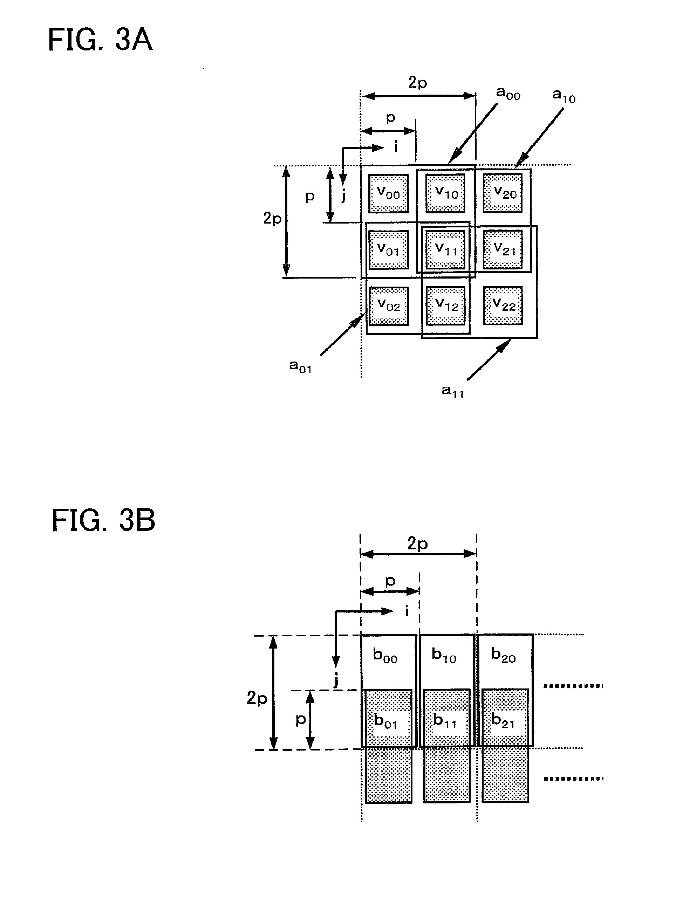

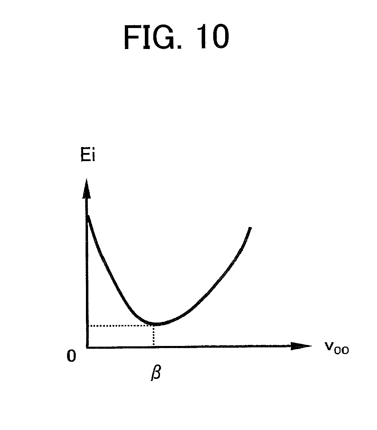

A pixel estimation method according to one embodiment of the invention is described below with reference to FIGS. 3A and 10. An example in which the estimation blocks are set on a $2 \times 2$ pixel basis, and each estimated pixel value is estimated from the light-receiving value $a_{00}$ of one light-receiving unit and the light-receiving values $a_{10}$, $a_{01}$, and $a_{11}$ of three virtual light-receiving units, is described below for convenience of explanation.

FIGS. 3A and 3B are views illustrating an estimated pixel value and an intermediate pixel value. As illustrated in FIG. 3A, estimated pixel values $v_{00}$ to $v_{22}$ are estimated using the light-receiving values $a_{00}$ to $a_{11}$. Specifically, a high-resolution image that has the same resolution (i.e., the same number of pixels) as that of the image sensor (pixel pitch: p) is estimated from the low-resolution images that include the light-receiving units (pixel pitch: 2p).

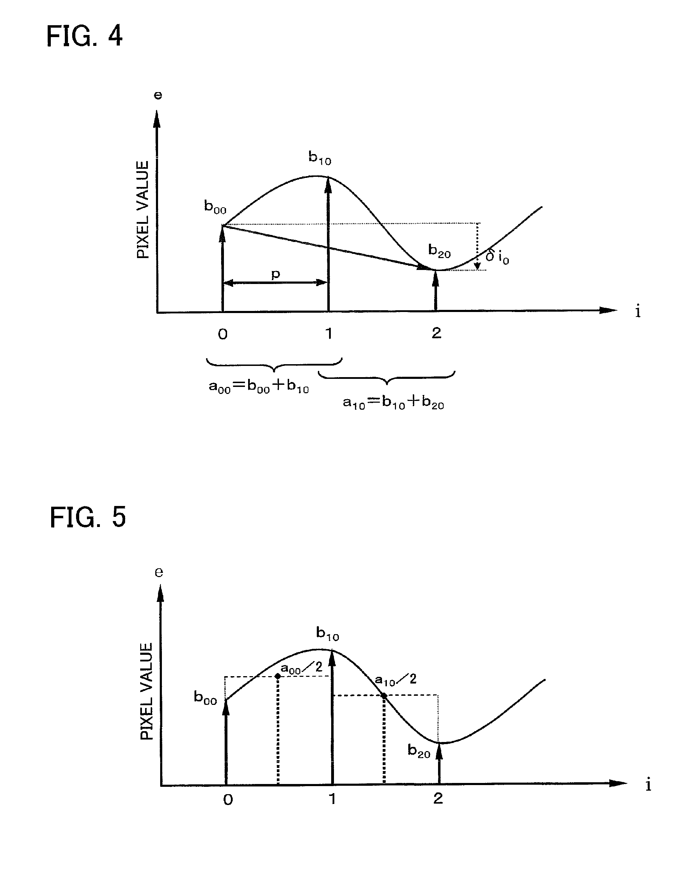

As illustrated in FIG. 3B, intermediate pixel values $b_{00}$ to $b_{21}$ (intermediate estimated pixel values or 2-pixel sum values) are estimated from the light-receiving values $a_{00}$ to $a_{11}$, and the pixel values $v_{00}$ to $v_{22}$ are estimated from the intermediate pixel values $b_{00}$ to $b_{21}$. An intermediate pixel value estimation method is described below using the intermediate pixel values $b_{00}$ to $b_{20}$ (see FIG. 4) in the first row (i.e., arranged in the horizontal direction) as an example. An example in which the resolution is increased in the horizontal direction to calculate each intermediate pixel value is described below. Note that the resolution may be increased in the vertical direction to calculate each intermediate pixel value.

The light-receiving value and the intermediate pixel value have the relationship shown by the following expression (2) (see FIG. 4).

$$a_{00} = b_{00} + b_{10},$$

$$a_{10} = b_{10} + b_{20} \qquad (2)$$

The intermediate pixel values $b_{10}$ and $b_{20}$ can be expressed as a function of the intermediate pixel value $b_{00}$ by transforming the expression (2) where the intermediate pixel value $b_{00}$ is an unknown (initial variable or initial value) (see the following expression (3)).

$$b_{00} = (\text{unknown}),$$

$$b_{10} = a_{00} - b_{00},$$

$$b_{20} = b_{00} + \delta i_0 = b_{00} + (a_{10} - a_{00}) \qquad (3)$$

Note that $\delta i_0$ is the difference between the light-receiving values of the light-receiving units that are shifted by one shift, and corresponds to the difference between the intermediate pixel values $b_{20}$ and $b_{00}$ (see the following expression (4)).

$$\delta i_0 = a_{10} - a_{00}$$

$$= (b_{10} + b_{20}) - (b_{00} + b_{10})$$

$$= b_{20} - b_{00} \qquad\qquad (4)$$

A high-resolution intermediate pixel value combination pattern $\{b_{00}, b_{10}, b_{20}\}$ is thus calculated where the intermediate pixel value $b_{00}$ is an unknown. It is necessary to calculate the unknown ($b_{00}$) in order to determine the absolute value (value or numerical value) of each intermediate pixel value expressed as a function of the intermediate pixel value $b_{00}$.

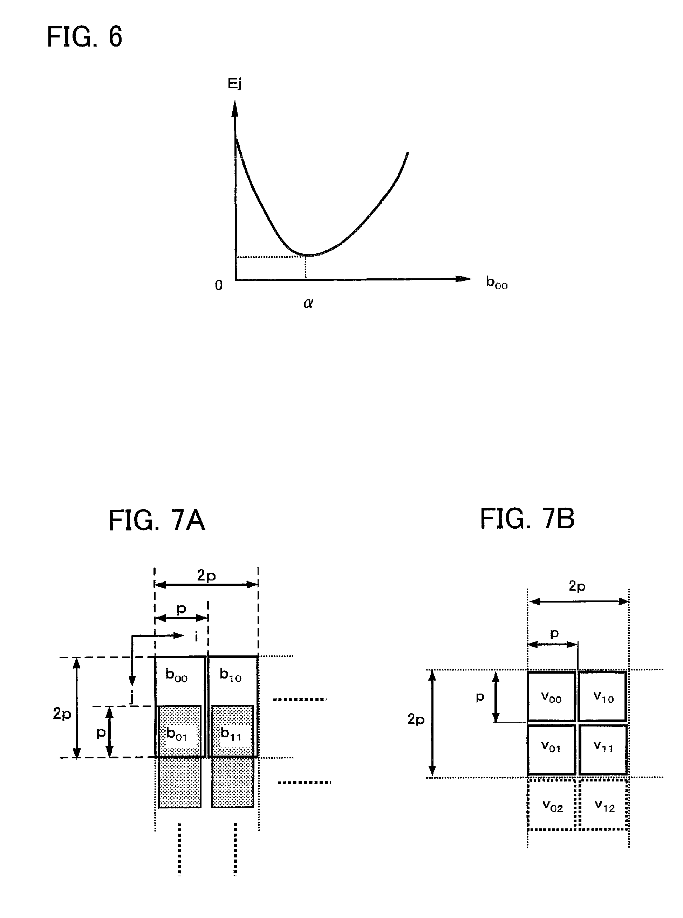

As illustrated in FIG. 5, the light-receiving value pattern $\{a_{00}, a_{10}\}$ is compared with the intermediate pixel value pattern $\{b_{00}, b_{10}, b_{20}\}$. An unknown ($b_{00}$) that minimizes an error between the light-receiving value pattern $\{a_{00}, a_{10}\}$ and the intermediate pixel value pattern $\{b_{00}, b_{10}, b_{20}\}$ is derived, and set as the intermediate pixel value $b_{00}$. More specifically, an error evaluation function Ej is expressed as a function of the unknown ($b_{00}$) (see the following expression (5)). As illustrated in FIG. 6, an unknown $\alpha$ (=$b_{00}$) (initial value) at which the value of the evaluation function Ej becomes a minimum (minimum value) is calculated by a search process (least-square method).

$$e_{ij} = (\frac{a_{ij}}{2} - b_{ij})^2 + (\frac{a_{ij}}{2} - b_{(i+1)j})^2,$$

$$Ej = \sum_{i=0}^{1} e_{ij} \qquad\qquad \cdot\ \ \cdot\ \ \cdot\quad (5)$$

In one embodiment of the invention, an error between the average value of the intermediate pixel values and the pattern $\{a_{00}, a_{10}\}$ containing a low-frequency component is evaluated (see the expression (5)). This makes it possible to prevent a situation in which a pattern that contains a large amount of high-frequency components is derived as an estimated solution of the intermediate pixel values $\{b_{00}, b_{10}, b_{20}\}$. More specifically, an image that contains a large amount of low-frequency components is generated even if the unknown is estimated incorrectly. Therefore, it is possible to prevent a situation in which a pattern is generated so that a high-frequency component that tends to produce unnaturalness as compared with a low-frequency component contains an error, so that a natural image can be obtained. A reasonable pixel estimation process can thus be performed on a natural image that contains a small amount of high-frequency components as compared with low-frequency components.

The intermediate pixel value $b_{00}$ thus estimated is substituted into the expression (3) to determine the intermediate pixel values $b_{10}$ and $b_{20}$. The intermediate pixel values $b_{01}$ to $b_{21}$ in the second row are similarly estimated where the intermediate pixel value $b_{01}$ is an unknown.

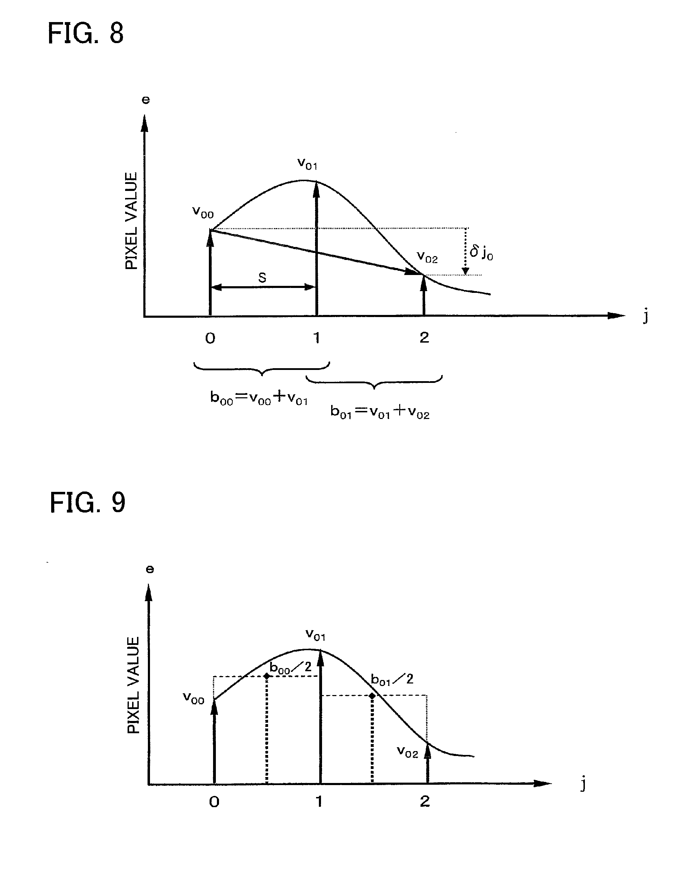

The estimated pixel values $v_{ij}$ are calculated as described below using the estimated intermediate pixel values $b_{ij}$. FIGS. 7A and 7B are views schematically illustrating the intermediate pixel value and the estimated pixel value. As illustrated in FIG. 7A, an estimation process is performed using the intermediate pixel values $b_{00}$ to $b_{11}$ (two columns) among the intermediate pixel values $b_{00}$ to $b_{21}$ (three columns) estimated by the above method. As illustrated in FIG. 7B, the pixel values $v_{00}$ to $v_{12}$ are estimated from the intermediate pixel values $b_{00}$ to $b_{11}$. The following description is given taking the pixel values $v_{00}$ to $v_{02}$ in the first column (see FIG. 8) as an example for convenience of explanation.

The pixel values $v_{00}$ to $v_{02}$ are estimated by a method similar to the intermediate pixel value estimation method. More specifically, the intermediate pixel values $b_{00}$ and $b_{01}$ are equal to values obtained by overlap-sampling the pixel values $v_{00}$ to $v_{02}$ on a two-pixel basis in the vertical direction. Therefore, the intermediate pixel values and the estimated pixel values have the relationship shown by the following expression (6).

$$b_{00}=v_{00}+v_{01},$$

$$b_{01}=v_{01}+v_{02} \qquad (6)$$

The pixel values $v_{01}$ and $v_{02}$ can be expressed as a function of an unknown ($v_{00}$) (see the following expression (7)).

$$v_{00}=(\text{unknown}),$$

$$v_{01}=b_{00}-v_{00},$$

$$v_{02}=v_{00}+\delta j_0=v_{00}+(b_{01}-b_{00}) \qquad (7)$$

Note that $\delta_{j0}$ is the difference between the intermediate pixel values that are shifted by one shift, and corresponds to the difference between the pixel values $v_{02}$ and $v_{00}$ (see the following expression (8)).

$$\delta i_0=b_{01}-b_{00}$$

$$=(v_{01}+v_{02})-(v_{00}+v_{01})$$

$$=v_{02}-v_{00} \qquad (8)$$

As illustrated in FIG. 9, the unknown ($v_{00}$) is derived so that an error between the intermediate pixel value pattern {$b_{00}$, $b_{10}$} and the estimated pixel value pattern {$v_{00}$, $v_{01}$, $v_{02}$} becomes a minimum. Specifically, an unknown $\beta$ (=$v_{00}$) at which the value of an error evaluation function Ei (see the following expression (9)) becomes a minimum (see FIG. 10) is calculated by a search process.

$$e_{ij} = (\frac{b_{ij}}{2} - v_{ij})^2 + (\frac{b_{ij}}{2} - v_{i(j+1)})^2,$$

$$Ei = \sum_{j=0}^{1} e_{ij} \qquad \cdot \ \ \cdot \ \ \cdot \quad (9)$$

The pixel values $v_{10}$ to $v_{12}$ in the second column are calculated in the same manner as described above to determine the final estimated pixel values $v_{00}$, $v_{01}$, $v_{10}$, and $v_{11}$. Note that an appropriate noise reduction process may be performed on the image data having the final estimated pixel values to obtain a display image. The final estimated pixel values $v_{00}$, $v_{01}$, $v_{10}$, and $v_{11}$ need not necessarily be calculated at one time. For example, the final estimated pixel values (e.g., $v_{00}$) may be sequentially calculated on a pixel basis while shifting the estimation block unit in the horizontal direction or the vertical direction.

Although an example in which the unknown ($b_{00}$ or $v_{00}$) is calculated by a search process has been described above, the unknown ($b_{00}$ or $v_{00}$) may be calculated directly. Specifically, the expression (5) (i.e., a quadratic function formula of the unknown ($b_{00}$)) that indicates the evaluation function Ej can be transformed into the following expression (10). Therefore, the minimum value $\alpha$ of the unknown ($b_{00}$) at which the value of the evaluation function Ej becomes a minimum can be calculated directly. The minimum value $\beta$ of the unknown ($v_{00}$) can also be similarly calculated.

$$Ej=(b_{00}-\alpha)^2+\xi \qquad (10)$$

A method that allows the user to select the still image shooting mode or the movie shooting mode has a problem in that it is difficult for the user to take the best shot (best moment). A method that increases the resolution using the super-resolution process has a problem in that the scale of the processing circuit necessarily increases in order to deal with high processing load, for example. A method that uses the pixel shift process has a problem in that a camera having a complex configuration is required since it is necessary to mechanically shift the optical system, and perform a shift readout process.

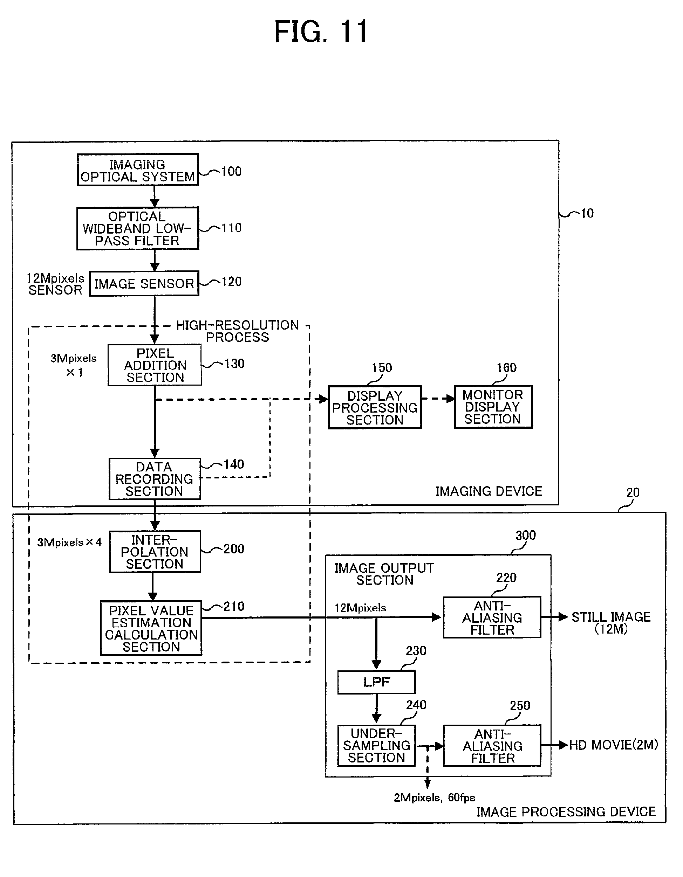

According to one embodiment of the invention, the light-receiving units that respectively acquire the light-receiving values $a_{-2,-2}$, $a_{0,-2}$, ..., and $a_{22}$ are set to the image sensor (e.g., image sensor 120 illustrated in FIG. 11), and the light-receiving values $a_{-2,-2}$, $a_{0,-2}$, ..., and $a_{22}$ of the light-receiving units are read to acquire a low-resolution frame image (see FIG. 1). The low-resolution frame image is stored in a storage section (e.g., data recording section 140 illustrated in FIG. 11). An interpolation section (interpolation section 200) calculates the light-receiving values $a_{10}$, $a_{01}$, and $a_{11}$ of the virtual light-receiving units by the interpolation process based on the light-receiving values $a_{-2,-2}$, $a_{0,-2}$, ..., and $a_{22}$ of the light-receiving units, the virtual light-receiving units being set to overlap the light-receiving unit that acquires the light-receiving value $a_{00}$ at a position shifted from the position of the light-receiving unit that acquires the light-receiving value $a_{00}$. An estimation calculation section (pixel value estimation calculation section 210) estimates the estimated pixel values $v_{00}$ to $v_{11}$ at the pixel pitch p smaller than the pixel pitch 2p of the low-resolution frame image based on the light-receiving value $a_{00}$ of the light-receiving unit and the light-receiving values $a_{10}$, $a_{01}$, and $a_{11}$ of the virtual light-receiving units (see FIG. 3A, for example). An image output section (image output section 300) outputs a high-resolution frame image having a resolution higher than that of the low-resolution frame image based on the estimated pixel values $v_{00}$ to $v_{11}$.

The position of the light-receiving unit refers to the position or the coordinates of the light-receiving unit in the light-receiving plane of the image sensor, or the position or the coordinates of the light-receiving unit indicated by estimated pixel value data (image data) used for the estimation process. The expression "position (coordinates) shifted from ..." refers to a position (coordinates) that does not coincide with the original position (coordinates). The expression "virtual light-receiving unit overlaps the light-receiving unit" means that the light-receiving unit and the virtual light-receiving unit have an overlapping area. For example, the expression "virtual light-receiving unit overlaps the light-receiving unit" means that the light-receiving unit $a_{00}$ and the virtual light-receiving unit $a_{10}$ share two estimated pixels $v_{10}$ and $v_{11}$ (see FIG. 3A).

The above configuration makes it possible to acquire a high-resolution image from a movie using a simple process, or increase the resolution of an image without performing a pixel shift process. For example, the estimation process can be simplified by utilizing the intermediate pixel value estimation process. Since a high-resolution still image at an arbitrary timing of the low-resolution movie can be generated, the user can easily obtain a high-resolution still image at the best moment. Moreover, a low-resolution movie (e.g., 3 Mpixels) can be shot at a high frame rate, and a high-resolution still image (12 Mpixels) or the like can arbitrarily be displayed.

The estimation calculation section may calculate the difference $\delta i_0$ ($=a_{10}-a_{00}$) between the light-receiving value $a_{00}$ of a first light-receiving unit that is set at a first position and the light-receiving value $a_{10}$ of a second light-receiving unit that is set at a second position and overlaps the first light-receiving unit (see FIG. 3A). The estimation calculation section may estimate the estimated pixel values $v_{00}$ to $v_{11}$ (i.e., the estimated pixel values in the estimating block) based on the difference $\delta i_0$. The first light-receiving unit is either the light-receiving unit or the virtual light-receiving unit. Specifically, the first light-receiving unit and the second light-receiving unit may respectively be the light-receiving unit and the virtual light-receiving unit, or both the first light-receiving unit and the second light-receiving unit may be the virtual light-receiving units.

The resolution can be increased using a simple process by thus estimating the estimated pixel values $v_{00}$ to $v_{11}$ based on the difference $\delta i_0$ between the light-receiving values $a_{10}$ and $a_{00}$ of the light-receiving units that overlap each other.

As illustrated in FIGS. 3A and 3B, a first intermediate pixel value $b_{00}$ may be the light-receiving value of a first light-receiving area (i.e., an area that includes the estimated pixel values $v_{00}$ and $v_{01}$) obtained by removing an overlapping area (i.e., an area that includes the estimated pixel values $v_{10}$ and $v_{11}$) from the first light-receiving unit that acquires the light-receiving value $a_{00}$. A second intermediate pixel value $b_{20}$ may be the light-receiving value of a second light-receiving area (i.e., an area that includes the estimated pixel values $v_{20}$ and $v_{21}$) obtained by removing an overlapping area from the second light-receiving unit that acquires the light-receiving value $a_{10}$. The estimation calculation section may express a relational expression of the first intermediate pixel value $b_{00}$ and the second intermediate pixel value $b_{20}$ using the difference $\delta i_0$ (see the expression (3)), and may estimate the first intermediate pixel value $b_{00}$ and the second intermediate pixel value $b_{20}$ using the relational expression. The estimation calculation section may calculate the estimated pixel values $v_{00}$ to $v_{11}$ using the first intermediate pixel value $b_{00}$ (see FIGS. 7A and 7B).

The high-resolution image estimation process can be simplified by estimating the intermediate pixel values from the light-receiving values obtained by overlap shift sampling, and calculating the estimated pixel values from the intermediate pixel values. For example, a complex process (e.g., repeated calculations using a two-dimensional filter (Patent Document 1) or a process that searches for an area appropriate for setting the initial value (Patent Document 2)) employed in the comparative example can be made unnecessary.

In one embodiment of the invention, when an intermediate pixel value pattern includes consecutive intermediate pixel values $\{b_{00}, b_{10}, b_{20}\}$ that include the first intermediate pixel value $b_{00}$ and the second intermediate pixel value $b_{20}$ (see FIG. 3B), the estimation calculation section may express a relational expression of the intermediate pixel values included in the intermediate pixel value pattern $\{b_{00}, b_{10}, b_{20}\}$ using the light-receiving values $a_{00}$ and $a_{10}$ (see the expression (3)). The estimation calculation section may compare the intermediate pixel value pattern $\{b_{00}, b_{10}, b_{20}\}$ expressed by the relational expression and the light-receiving value pattern $\{a_{00}, a_{10}\}$ expressed by the light-receiving values $a_{00}$ and $a_{10}$ to evaluate similarity, and may determine the intermediate pixel values $b_{00}$ to $b_{20}$ included in the intermediate pixel value pattern so that the similarity becomes a maximum based on the similarity evaluation result (see FIG. 5).

Note that the intermediate pixel value pattern is a data string (data set) of intermediate pixel values within a range used for the estimation process. The light-receiving value pattern is a data string of light-receiving values within a range used for the estimation process (i.e., a data string that includes the light-receiving value of the light-receiving unit and the light-receiving value of the virtual light-receiving unit).

The above configuration makes it possible to estimate the intermediate pixel values $b_{00}$ to $b_{20}$ based on the light-receiving value $a_{00}$ of the light-receiving unit, and the light-receiving value $a_{10}$ of the virtual light-receiving unit calculated by the interpolation process using the light-receiving value of the light-receiving unit. It is also possible to estimate a high-resolution intermediate pixel value pattern similar to the light-receiving value pattern by comparing the intermediate pixel value pattern $\{b_{00}, b_{10}, b_{20}\}$ and the light-receiving value pattern $\{a_{00}, a_{10}\}$.

The estimation calculation section may calculate the evaluation function $Ej$ that indicates an error between the intermediate pixel value pattern $\{b_{00}, b_{10}, b_{20}\}$ and the light-receiving value pattern $\{a_{00}, a_{10}\}$ (see the expression (5)), may calculate the unknown $\alpha$ $(=b_{00})$ (initial value) at which the value of the evaluation function $Ej$ becomes a minimum, and may determine the intermediate pixel values $b_{00}$ to $b_{20}$ using the calculated unknown $(b_{00})$.

The intermediate pixel values can thus be estimated by expressing the error using the evaluation function, and calculating the intermediate pixel value that corresponds to the minimum value of the evaluation function. For example, the initial value used for the intermediate pixel value estimation process can be set using a simple process by calculating the unknown using the least-square method. Specifically, it is unnecessary to search for an image area appropriate for setting the initial value, differing from the comparative example (Patent Document 2).

The interpolation section may calculate the weighted sum of the light-receiving values (among the light-receiving values $a_{-2,-2}$, $a_{0,-2}$, ..., and $a_{22}$) of a plurality of light-receiving units included in the low-resolution frame image that are positioned around each virtual light-receiving unit to calculate the light-receiving values $a_{10}$, $a_{01}$, and $a_{11}$ of the virtual light-receiving units (see FIG. 1).

The plurality of light-receiving units positioned around each virtual light-receiving unit include at least a light-receiving unit that overlaps each virtual light-receiving unit (e.g., the light-receiving units $a_{00}$ and $a_{20}$ that overlap the virtual light-receiving unit $a_{10}$). The plurality of light-receiving units positioned around each virtual light-receiving unit may include a light-receiving unit that overlaps each virtual light-receiving unit and a light-receiving unit adjacent to the light-receiving unit that overlaps each virtual light-receiving unit (e.g., the light-receiving units $a_{00}$ and $a_{20}$ that overlap the virtual light-receiving unit $a_{10}$, and the light-receiving unit $a_{0,-2}$, $a_{2,-2}$, $a_{02}$, and $a_{22}$ adjacent to the light-receiving units $a_{00}$ and $a_{20}$).

This makes it possible to calculate the light-receiving values $a_{10}$, $a_{01}$, and $a_{11}$ of the virtual light-receiving units that are set to overlap the light-receiving unit $a_{00}$ by performing the interpolation process based on the light-receiving values $a_{-2,-2}$, $a_{0,-2}$, ..., and $a_{22}$ of the light-receiving units.

4. First configuration example of imaging device and image processing device

FIG. 11 illustrates a first configuration example of an imaging device and an image processing device that implement the interpolation process and the estimation process. An imaging device 10 illustrated in FIG. 11 includes an imaging optical system 100 (lens), an optical low-pass filter 110 (optical wideband low-pass filter), an image sensor 120 (imaging section), a pixel addition section 130 (readout control section), a data recording section 140 (storage section), a display processing section 150 (display control section), and a monitor display section 160 (display device). An image processing device 20 illustrated in FIG. 11 includes an interpolation section 200 (overlap-shift/pixel-sum-up low-resolution image interpolation calculation section), a pixel value estimation calculation section 210 (high-resolution image pixel value estimation calculation section or estimation section), and an image output section 300.

Note that the configuration of the imaging device and the image processing device according to one embodiment of the invention is not limited to the configuration illustrated in FIG. 11. Various modifications may be made, such as omitting some of the elements or adding other elements. Although FIG. 11 illustrates an example in which the image processing device 20 is provided outside the imaging device 10, the image processing device 20 may be provided in the imaging device 10.

The imaging device 10 is a digital camera or a video camera, for example. The imaging optical system 100 forms an image of an object. The optical wideband low-pass filter 110 allows light within a band that corresponds to the resolution of the image sensor 120 to pass through, for example. The image sensor 120 (e.g., 12 Mpixels) is a CCD sensor or a CMOS sensor that implements an analog addition readout process, for example. The pixel addition section 130 controls the light-receiving unit setting process and the addition readout process, and acquires a low-resolution frame image (e.g., 3 Mpixels (one image/frame)), for example. The data recording section 140 is implemented by a memory card or the like, and records a movie formed by the low-resolution frame images. The monitor display section 160 displays a live-view movie, or displays a movie that is being played.

The image processing device 20 is implemented by an image processing engine (IC) or a computer (PC), for example. The interpolation section 200 interpolates the light-receiving values of the low-resolution frame image to calculate shifted images (e.g., 3 Mpixels (four images/frame)). The pixel value estimation calculation section 210 estimates the final estimated pixel values. The image output section 300 includes anti-aliasing filters 220 and 250, a low-pass filter 230, and an under-sampling section 240, and outputs a still image or a movie using the final estimated pixel values. The anti-aliasing filter 220 performs an anti-aliasing process on the final estimated pixel values, and outputs a high-resolution still image (e.g., 12 Mpixels). The low-pass filter 230 limits the final estimated pixel values to the High-Vision band. The under-sampling section 240 under-samples the band-limited final estimated pixel values to the number of pixels used for a High-Vision movie. The anti-aliasing filter 220 performs an anti-aliasing process on the under-sampled image, and outputs a High-Vision movie (e.g., 2 Mpixels). Note that a high-resolution movie (e.g., 12 Mpixels) may be output without performing the under-sampling process.

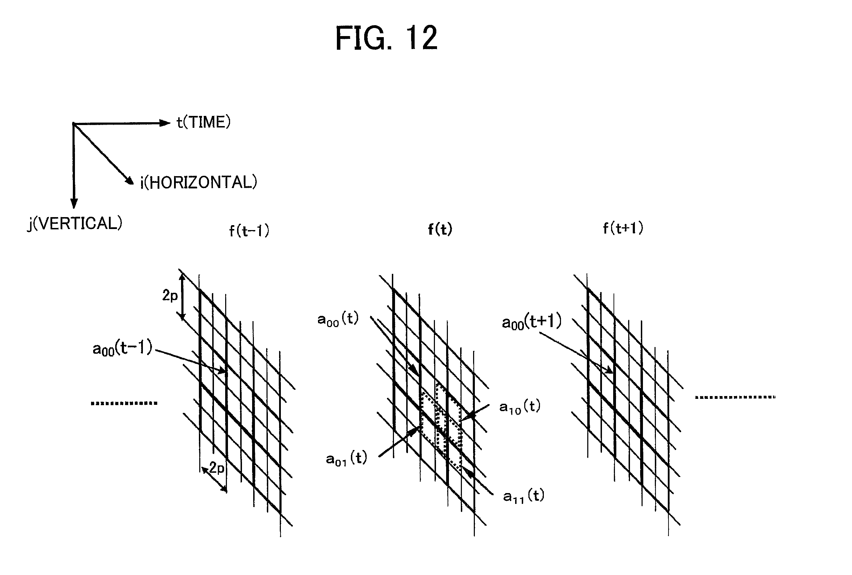

FIG. 12 is a view illustrating the interpolation method employed when shooting a movie. As illustrated in FIG. 12, a low-resolution frame image is acquired every frame using the addition readout process when shooting a movie. For example, light-receiving values $a_{00}(t-1)$, $a_{00}(t)$, and $a_{00}(t+1)$ are acquired in frames f(t- 1), f(t), and f(t+1), respectively. When generating a high-resolution still image in the frame f(t), the interpolation process is performed on the low-resolution frame image in the frame f(t) to calculate light-receiving values $a_{10}(t)$, $a_{01}(t)$, and $a_{11}(t)$ of virtual light-receiving units in the frame f(t). A high-resolution still image is estimated from these light-receiving values. The interpolation process is not performed on the low-resolution frame images in the frames f(t-1) and f(t+1) that are not used to generate a still image.

Note that the term "frame" used herein refers to a timing at which one low-resolution frame image is captured by an image sensor, or a timing at which one low-resolution frame image is processed by image processing, for example. A low-resolution frame image or a high-resolution frame image included in image data may also be appropriately referred to as "frame".

According to the above configuration example, the image output section 300 performs the resolution conversion process on the high-resolution frame image (12 Mpixels) to output a High-Vision movie (2 Mpixels), or outputs the high-resolution frame image (12 Mpixels) as a high-resolution still image (12 Mpixels).

This makes it possible to shoot a low-resolution movie at a high frame rate, and output a high-resolution still image at an arbitrary timing from the movie. Specifically, the user can select the desired timing and the desired composition while playing a High-Vision movie to obtain a high-resolution still image. Note that the high-resolution still image or the High-Vision movie are output to a display section, a memory, a printer, or the like (not illustrated in FIG. 11). When the image processing device 20 is included in the imaging device 10, the high-resolution still image or the High-Vision movie may be displayed on the monitor display section 160.

5. Second estimated pixel value estimation method (color)

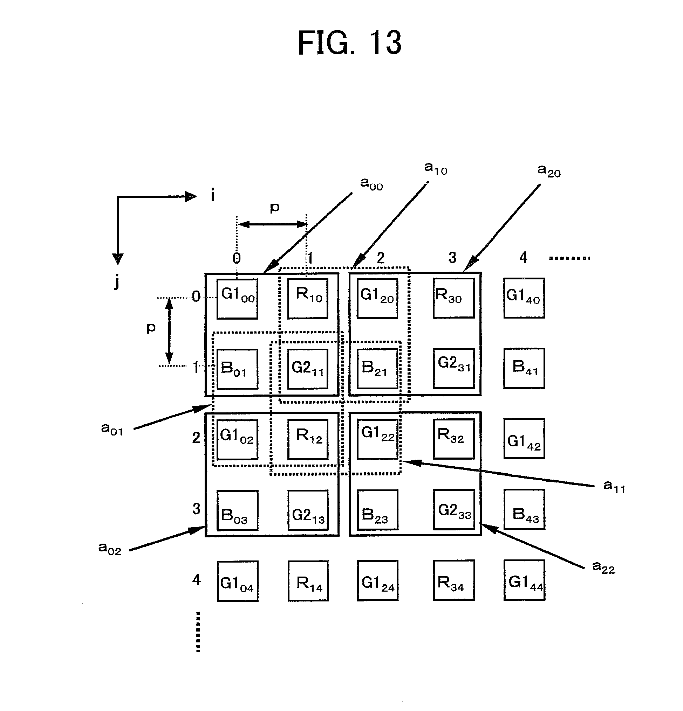

Although an example in which the pixel values of a monochromatic image are estimated has been described above, the embodiments of the invention may also be applied when estimating the pixel values of a color image. A second estimated pixel value estimation method that estimates the pixel values of a color image is described below with reference to FIG. 13.

The second color image estimation method performs the addition readout process without distinguishing RGB to estimate the final RGB pixel values. More specifically, the light-receiving values $a_{00}$, $a_{20}$, and the like are acquired by the imaging operation (see FIG. 11). The light-receiving values $a_{10}$, $a_{01}$, $a_{11}$, and the like are calculated by the interpolation process. For example, the light-receiving values $a_{00}$, $a_{10}$, $a_{01}$, and $a_{11}$ are shown by the following expression (11).

$$a_{00}=R_{10}+G1_{00}+G2_{11}+B_{01},$$

$$a_{10}=R_{10}+G1_{20}+G2_{11}+B_{21},$$

$$a_{01}=R_{12}+G1_{02}+G2_{11}+B_{01},$$

$$a_{11} = R_{12} + G1_{22} + G2_{11} + B_{21} \qquad (11)$$

The pixel values $v_{00}$, $v_{10}$, $v_{01}$, and $v_{11}$ are estimated based on these light-receiving values using the above estimation process (see FIG. 3A, for example). Since the relationship between the estimated pixel values and RGB is known, the RGB estimated pixel values $GI_{00}=v_{00}$, $R_{10}=v_{10}$, $B_{01}=v_{01}$, and $G2_{11}=v_{11}$ can be calculated.

According to the above estimation method, the image sensor may be a color image sensor (RGB image sensor), and a plurality of adjacent pixels $GI_{00}$, $R_{10}$, $B_{01}$, and $G2_{11}$ may be set as the light-receiving unit independently of the color of each pixel. The pixel values of the plurality of pixels set as the light-receiving unit are summed up, and read ($a_{00}=G1_{00}+R_{10}+B_{01}+G2_{11}$) to acquire a low-resolution frame image. The pixel values $GI_{00}$, $R_{10}$, $B_{01}$, and $G2_{11}$ of the pixels of the light-receiving unit are estimated based on the light-receiving value $a_{00}$ acquired by the imaging operation and the light-receiving values $a_{10}$, $a_{01}$, and $a_{11}$ calculated by the interpolation process, and a high-resolution color frame image is output based on the estimated pixel values.

This makes it possible to shoot a low-resolution color frame image at a high frame rate, and estimate the pixel values from the low-resolution frame image to acquire a high-resolution color frame image at an arbitrary timing. Since the light-receiving value is acquired by summing up the pixel values of four adjacent pixels, random noise can be reduced. Since it is unnecessary to distinguish the colors of the pixels so that the readout pixels are positioned close to each other, a high-resolution estimation process can be implemented as compared with the case of using the light-receiving units on a color basis.

6. Third estimated pixel value estimation method

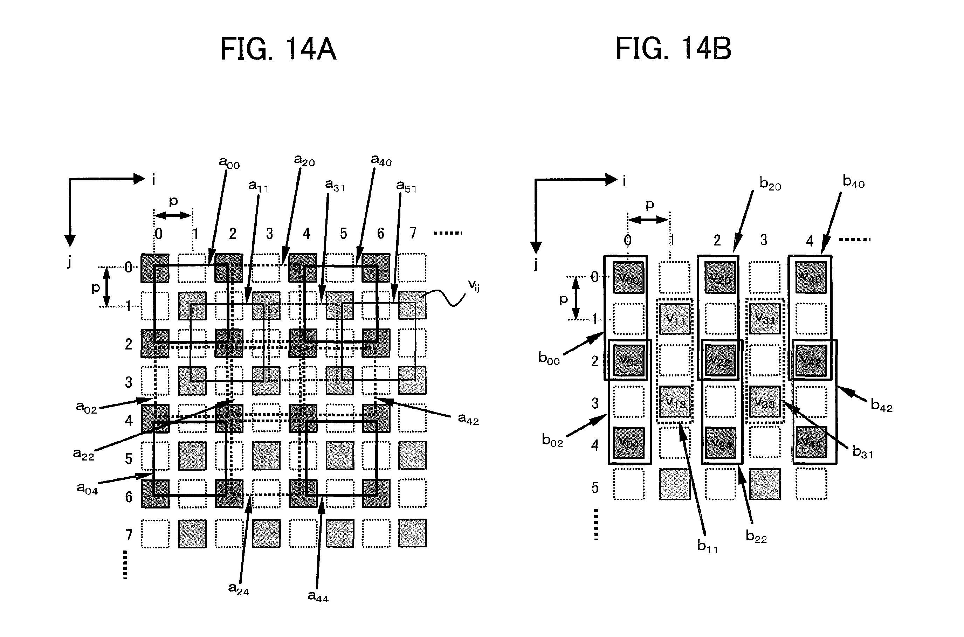

The addition readout process may be performed on an RGB basis to estimate the final RGB pixel values. A third estimated pixel value estimation method that performs the addition readout process on an RGB basis is described below with reference to FIGS. 14A to 17.

The G pixel value is estimated as described bellow. As illustrated in FIG. 14A, the 4-pixel sum values $\{a_{00}, a_{40}, ...\}$ of the G1 pixels and the 4-pixel sum values $\{a_{11}, a_{51}, ...\}$ of the G2 pixels are sampled as the light-receiving values of the light-receiving units. In FIG. 14A, the G1 pixels are indicated by a dark hatched square, the G2 pixels are indicated by a light hatched square, the light-receiving units are indicated by a solid line, and the virtual light-receiving units are indicated by a dotted line. The light-receiving values $\{a_{20}, ... , a_{02}, a_{22}, ...\}$ of the G1 virtual light-receiving units and the light-receiving values $\{a_{31}, ... , a_{13}, a_{33}, ...\}$ of the G2 virtual light-receiving units are calculated from the acquired light-receiving values by performing an interpolation process. The interpolation process may be separately performed on the G1 pixels and the G2 pixels using the above interpolation method, or may be performed by a common interpolation method using the light-receiving values of the G1 pixels and the light-receiving values of the G2 pixels. For example, the light-receiving value $a_{20}$ is calculated by calculating the average value of the light-receiving values $a_{00}$ and $a_{40}$.

The final pixel values $v_{ij}$ of the G pixels are estimated from these light-receiving values. More specifically, the final pixel values $v_{ij}$ of the G pixels are estimated from the following first group G1 (i.e., the 4-pixel sum values of the G1 pixels) and the following second group G2 (i.e., the 4-pixel sum values of the G2 pixels). Note that L is an integer equal to or larger than 0.

First group G1: $\{a_{00}, a_{20}, a_{40}, ... , a_{(2L)(2L)}, ...\}$
Second group G2: $\{a_{11}, a_{31}, a51, ... , a_{(2L+1)(2L+1)}, ...\}$

FIG. 14B is a view illustrating the intermediate pixels and the estimated pixels. As illustrated in FIG. 14B, the intermediate pixel values $\{b_{00}, b_{20}, b_{40}, ...\}$ of the G1 pixels and the intermediate pixel values $\{b_{11}, b_{31}, ...\}$ of the G2 pixels are estimated. Each intermediate pixel is set to overlap the next intermediate pixel in the vertical direction. The estimated pixel values $\{v_{00}, v_{20}, v_{40}, ...\}$ of the G1 pixels and the estimated pixel values $\{v_{11}, v_{31}, ...\}$ of the G2 pixels are estimated from the intermediate pixel values.

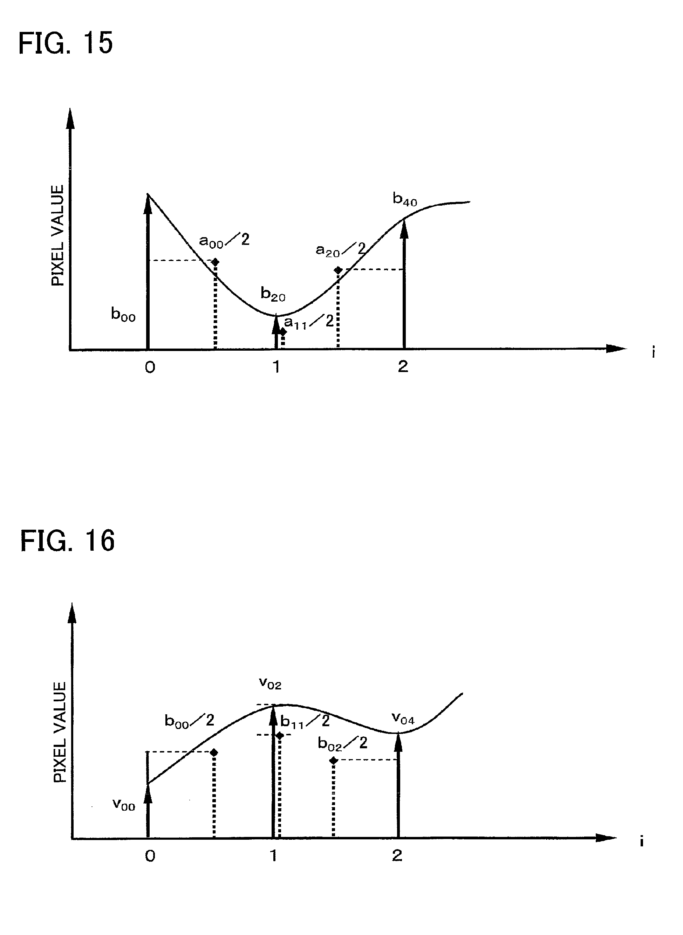

The intermediate pixel values are estimated as described below. The following description focuses on the intermediate pixel values of the G1 pixels. Note that the intermediate pixel values of the G2 pixels can be estimated in the same manner as the intermediate pixel values of the G1 pixels. When the 4-pixel sum values (pixel values) $a_{ij}$ in the first row (arranged in the horizontal direction) are referred to as $a_{00}$, $a_{20}$, and $a_{40}$ in the shift order (see FIG. 15), the following expression (12) is satisfied.

$$a_{00}=b_{00}+b_{20},$$

$$a_{20}=b_{20}+b_{40} \qquad\qquad (12)$$

The intermediate pixel values $b_{20}$ and $b_{40}$ can be calculated as a function of the intermediate pixel value $b_{00}$ where the intermediate pixel value $b_{00}$ is an unknown (initial variable) (see the following expression (13)).

$$b_{00}=(\text{unknown}),$$

$$b_{20}=a_{00}\text{-}b_{00},$$

$$b_{40}=b_{00}+\delta i_0=b_{00}+(a_{20}\text{-}a_{00}) \qquad\qquad (13)$$

Note that $\delta i_0$ is the difference between the light-receiving values shifted by one shift, and is shown by the following expression (14).

$$\delta i_0=a_{20}\text{-}a_{00}$$

$$=(b_{00}+b_{20})\text{-}(b_{20}+b_{40})$$

$$=b_{40}\text{-}b_{00} \qquad\qquad (14)$$

The intermediate pixel value pattern {$b_{00}$, $b_{20}$, $b_{40}$} is compared with the 4-pixel sum value pattern {$a_{00}$, $a_{11}$, $a_{20}$} (see the FIG. 15), and an unknown ($b_{00}$) at which an error between the intermediate pixel value pattern {$b_{00}$, $b_{20}$, $b_{40}$} and the 4-pixel sum value pattern {$a_{00}$, $a_{11}$, $a_{20}$} becomes a minimum is derived, and set as the intermediate pixel value $b_{00}$. The 4-pixel sum value pattern {$a_{00}$, $a_{11}$, $a_{20}$} is a light-receiving value pattern obtained by combining the light-receiving values included in the first group G1 and the second group G2. More specifically, an evaluation function $e_{ij}$ shown by the following expression (15) is calculated as an error evaluation function, and an unknown ($b_{00}$) at which the value of the evaluation function $e_{00}$ becomes a minimum is calculated. The intermediate pixel values $b_{20}$ and $b_{40}$ are calculated by the expression (13) using the calculated intermediate pixel value $b_{00}$. The intermediate pixel values {$b_{02}$, $b_{22}$, $b_{42}$} and the like can be calculated by applying the above method.

$$e_{ij}=(\frac{a_{ij}}{2}-b_{ij})^2+(\frac{a_{(i+1)(j+1)}}{2}-b_{(i+2)j})^2+(\frac{a_{(i+2)j}}{2}-b_{(i+4)j})^2 \quad \cdot\ \cdot\ \cdot\ (15)$$

It is likely that the method that compares the intermediate pixel value pattern with the light-receiving value pattern obtained by combining the light-receiving values included in the first group G1 and the second group G2 can easily estimate a higher spatial frequency component as compared with a method that compares the intermediate pixel value pattern with the light-receiving value pattern that includes only the light-receiving values included in the first group G1. Note that the light-receiving value pattern {$a_{00}$, $a_{20}$} that includes only the light-receiving values included in the first group G1 may be compared with the intermediate pixel value pattern {$b_{00}$, $b_{20}$, $b_{30}$}. It is desirable to appropriately select the 4-pixel sum values to be compared with the intermediate pixel value pattern so that the estimation accuracy is improved.

The estimated pixel values $v_{ij}$ are estimated as described below. The following description focuses on the estimated pixel values of the G1 pixels. Note that the estimated pixel values of the G2 pixels can be estimated in the same manner as the estimated pixel values of the G1 pixels. When the intermediate estimated pixel values $b_{ij}$ in the first column (arranged in the vertical direction) are referred to as $b_{00}$ and $b_{02}$ in the shift order (see FIG. 16), the following expression (16) is satisfied.

$$b_{00} = v_{00} + v_{02},$$

$$b_{02} = v_{02} + v_{04} \qquad (16)$$

The final estimated pixel value $v_{02}$ and $v_{04}$ can be calculated as a function of the final estimated pixel value $v_{00}$ where the final estimated pixel value $v_{00}$ is an unknown (initial variable) (see the following expression (17)).

$$v_{00} = \text{unknown},$$

$$v_{02} = b_{00} - v_{00},$$

$$v_{04} = b_{00} + \delta j_0 = b_{00} + (b_{02} - b_{00}) \qquad (17)$$

Note that $\delta j_0$ is the difference between the intermediate pixel values shifted by one shift, and is shown by the following expression (18).

$$\delta j_0 = b_{02} - b_{00}$$

$$= (v_{02} + v_{04}) - (v_{02} + v_{00})$$

$$= v_{04} - v_{00} \qquad (18)$$

The final estimated pixel value pattern $\{v_{00}, v_{02}, v_{04}\}$ is compared with the intermediate pixel value pattern $\{b_{00}, b_{11}, b_{02}\}$ (see the FIG. 16), and an unknown ($v_{00}$) at which an error between the final estimated pixel value pattern $\{v_{00}, v_{02}, v_{04}\}$ and the intermediate pixel value pattern $\{b_{00}, b_{11}, b_{02}\}$ becomes a minimum is derived, and set as the final estimated pixel value $v_{00}$. The intermediate pixel value pattern $\{b_{00}, b_{11}, b_{02}\}$ is an intermediate pixel value pattern obtained by combining the intermediate pixel values of the pixels G1 and the pixels G2. More specifically, an evaluation function $e_{ij}$ shown by the following expression (19) is calculated as an error evaluation function, and an unknown ($v_{00}$) at which the value of the evaluation function $e_{00}$ becomes a minimum is calculated. The final estimated pixel value $v_{20}$ is calculated by the expression (17) using the calculated final estimated pixel value $v_{00}$. The final estimated pixel values $\{v_{20}, v_{22}\}$ and the like can be calculated by applying the above method. The final estimated pixel values $\{v_{00}, v_{02}, v_{20}, v_{22}\}$ of the high-resolution image are thus calculated.

$$e_{ij} = (\frac{b_{ij}}{2} - v_{ij})^2 + (\frac{b_{(i+1)(j+1)}}{2} - v_{i(j+2)})^2 + (\frac{b_{i(j+2)}}{2} - v_{i(j+4)})^2 \quad \cdot \quad \cdot \quad \cdot \quad (19)$$

It is likely that the method that compares the final estimated pixel value pattern with the intermediate pixel value pattern obtained by combining the intermediate pixel values of the pixels G1 and the pixels G2 can easily estimate a higher spatial frequency component as compared with a method that compares the final estimated pixel value pattern with the intermediate pixel value pattern that includes only the intermediate pixel values of the pixels G1. Note that the intermediate pixel value pattern $\{b_{00}, b_{02}\}$ that includes only the intermediate pixel values of the pixels G1 may be compared with the final estimated pixel value pattern $\{v_{00}, v_{02}, v_{04}\}$. It is desirable to appropriately select the intermediate pixel values to be compared with the final estimated pixel value pattern so that the estimation accuracy is improved.

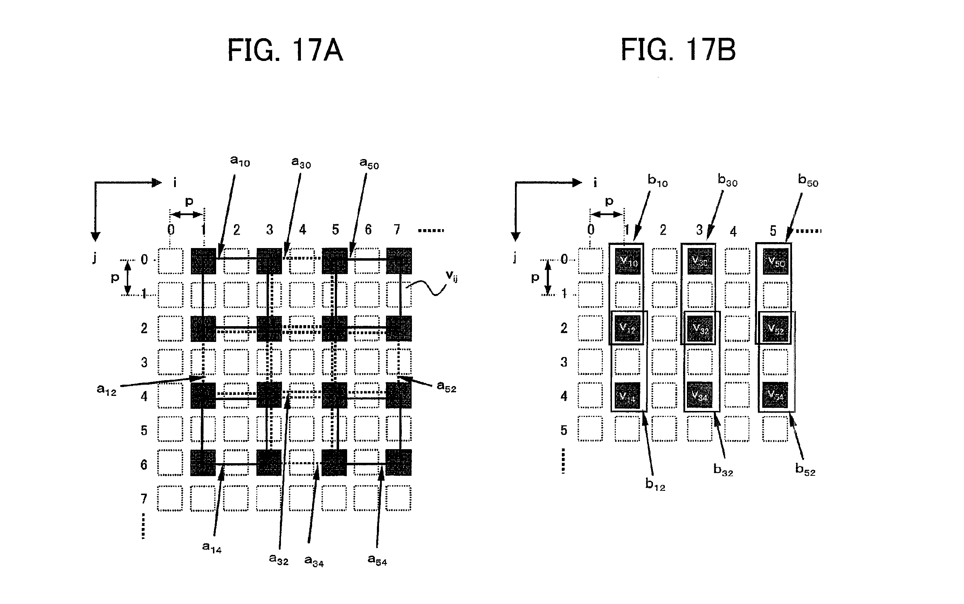

The pixel values of the R pixels and the pixel values of the B pixels are estimated as described below. The following description illustrates an example in which the pixel values of the R pixels are estimated. Note that the pixel values of the B pixels can also be estimated by the following method. As illustrated in FIG. 17A, the 4-pixel sum values $\{a_{10}, a_{50}, ...\}$ of the R pixels are sampled as the light-receiving values of the light-receiving units. In FIG. 17A, the R pixels are indicated by a hatched square, the light-receiving units are indicated by a solid line, and the virtual light-receiving units are indicated by a dotted line. The light-receiving values $\{a_{30}, ... , a_{12}, a_{32}, ...\}$ of the R virtual light-receiving units are calculated from the acquired light-receiving values by performing the interpolation process.

FIG. 17B is a view illustrating the intermediate pixels and the estimated pixels. As illustrated in FIG. 17B, the intermediate pixel values $\{b_{10}, b_{30}, b_{50}, ...\}$ of the R pixels are estimated. Each intermediate pixel is set to overlap the next intermediate pixel in the vertical direction. The estimated pixel values $\{v_{10}, v_{30}, v_{50}, ...\}$ of the R pixels are estimated from the intermediate pixel values. The intermediate pixel values and the estimated pixel values are estimated by a method similar to the method described above with reference to FIGS. 3A to 10. A high-resolution Bayer-array estimated image is obtained by the above process, and a high-resolution RGB frame image is obtained by performing the Bayer interpolation process on the estimated image.

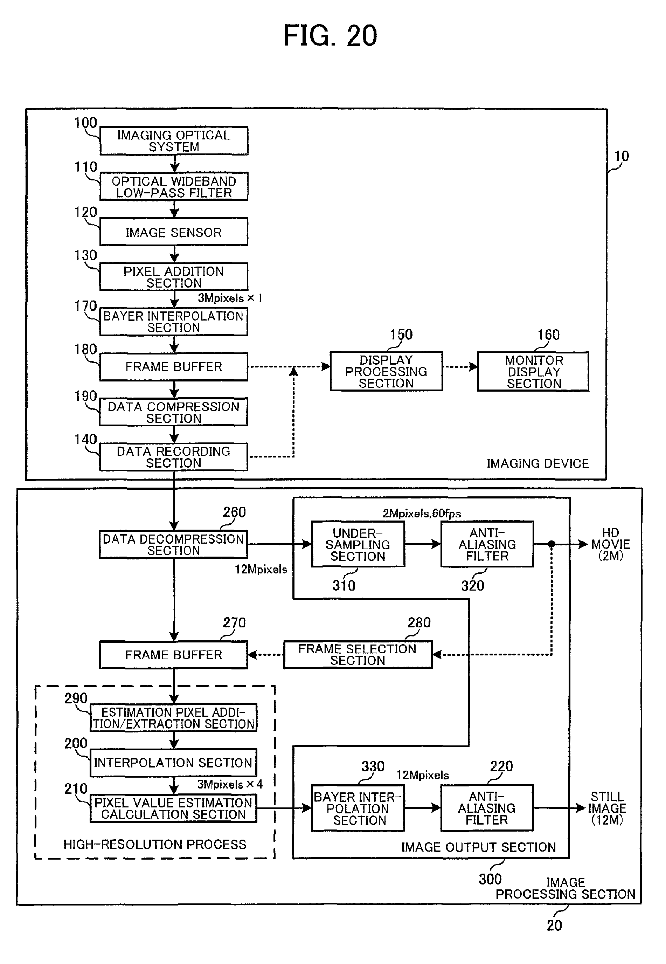

According to the above estimation method, the image sensor may be a color image sensor, and a plurality of pixels of an identical color may be set as the light-receiving units (e.g., the light-receiving units of the G1 pixels and the light-receiving units of the G2 pixels illustrated in FIG. 14A). The pixel values of the plurality of pixels set as the light-receiving units may be summed up, and read (e.g., the G1 light-receiving value $a_{00}$ and the G2 light-receiving value $a_{11}$) to acquire a low-resolution frame image. The estimation calculation section (e.g., pixel value estimation calculation section 210 illustrated in FIG. 20) may estimate the pixel value (e.g., $v_{00}$ and $v_{20}$) of each pixel of the light-receiving units based on the light-receiving values (e.g., $a_{00}$ and $a_{11}$) of the light-receiving units of the low-resolution frame image and the light-receiving values (e.g., $a_{20}$ and $a_{31}$) of the virtual light-receiving units output from the interpolation section (interpolation section 200). The image output section (image output section 300) may output a high-resolution color frame image based on the estimated pixel values.

This makes it possible to shoot a low-resolution color frame image at a high frame rate, and estimate the pixel values from the low-resolution frame image to acquire a high-resolution color frame image at an arbitrary timing. Since the light-receiving value is acquired by adding up the pixel values of an identical color, it is possible to implement an estimation process that achieves high color reproducibility even if the image has a small color correlation, so that occurrence of a false color due to the estimation process can be suppressed.

7. Data compression/decompression process and estimation process

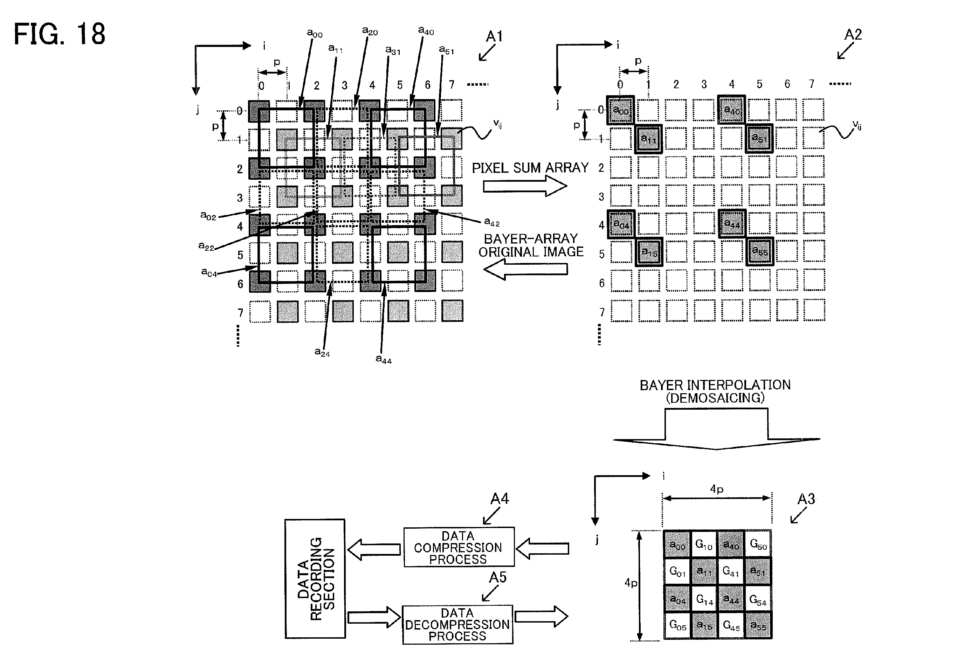

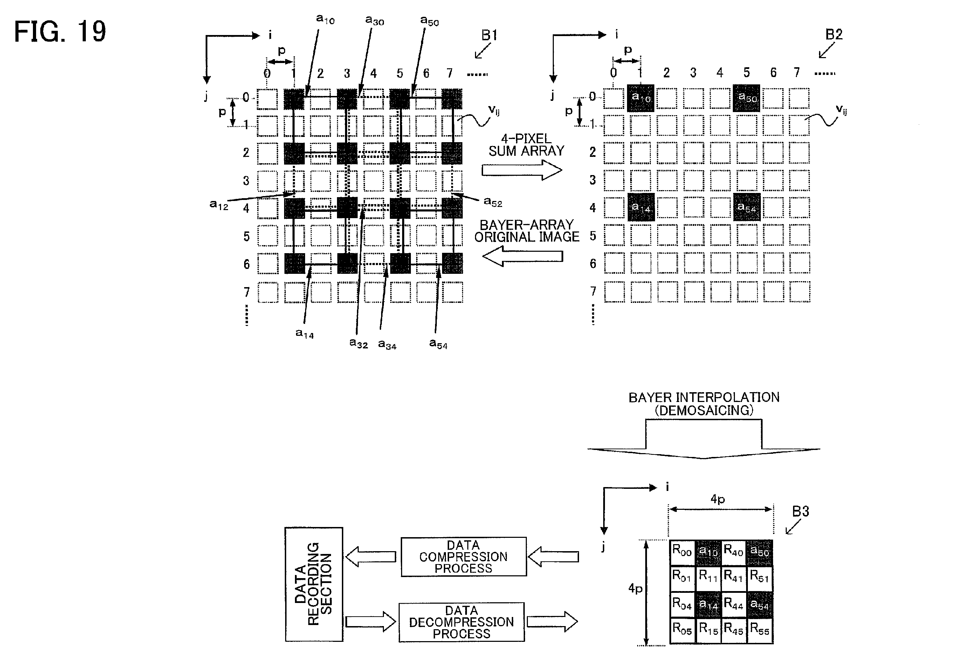

A process that compresses and decompresses a shot low-resolution image, and a process that estimates pixel values from the decompressed low-resolution image are described below with reference to FIGS. 18 and 19.

FIG. 18 is a view illustrating a G-pixel compression/decompression process. As indicated by A1 in FIG. 18, the 4-pixel sum values $\{a_{00}, a_{40}, a_{11}, a_{51}, ...\}$ of the G1 pixels and the G2 pixels are acquired. A2 indicates the relationship between the 4-pixel sum values $\{a_{00}, a_{40}, a_{11}, a_{51}, ...\}$ and the G pixels of the Bayer-array original image (high resolution). As indicated by A3, the missing pixel values $\{G_{10}, G_{50}, G_{01}, G_{41}, ...\}$ are calculated by performing the Bayer interpolation process (demosaicing process). These pixel values are calculated by the interpolation process using the 4-pixel sum values positioned around each missing pixel.

As indicated by A4, data obtained by the Bayer interpolation process is compressed, and recorded in a data recording section. As indicated by A5, the compressed data recorded in the data recording section is decompressed to reproduce the data obtained by the Bayer interpolation process (see A3) when estimating the pixel values of the original image. The estimated pixel values $v_{ij}$ are estimated using the values that correspond to the 4-pixel sum values $a_{ij}$ instead of the interpolated values $G_{ij}$. Since the pixels that correspond to the 4-pixel sum values are known when using the Bayer interpolation process, the pixels contained in the decompressed data that are used for the estimation process may be determined in advance.

FIG. 19 is a view illustrating an R-pixel compression/decompression process. Note that a B-pixel compression/decompression process can be implemented in the same manner as the R-pixel compression/decompression process. As indicated by B1 in FIG. 19, the 4-pixel sum values $\{a_{10}, a_{50}, ...\}$ of the R pixels are acquired. B2 indicates the relationship between the 4-pixel sum values $\{a_{10}, a_{50}, ...\}$ and the R pixels of the Bayer-array original image (high resolution). As indicated by B3, the missing pixel values $\{R_{00}, R_{01}, R_{11}, R_{40}, R_{41}, R_{51}, ...\}$ are calculated by performing the Bayer interpolation process. These pixel values are calculated by the interpolation process using the 4-pixel sum values positioned around each missing pixel. The estimated pixel values $v_{ij}$ are estimated using the values contained in the decompressed data that correspond to the 4-pixel sum values $a_{ij}$.

8. Second configuration example of imaging device and image processing device

FIG. 20 illustrates a second configuration example of an imaging device and an image processing device that implement the above compression/decompression process. An imaging device 10 illustrated in FIG. 20 includes an imaging optical system 100, an optical wideband low-pass filter 110, an image sensor 120, a pixel addition section 130, a data recording section 140, a display processing section 150, a monitor display section 160, a Bayer interpolation section 170 (demosaicing section), a frame buffer 180, and a data compression section 190. An image processing device 20 includes an interpolation section 200, a pixel value estimation calculation section 210, a data decompression section 260, a frame buffer 270 (storage section), a frame selection section 280, an estimation pixel summation/extraction section 290, and an image output section 300. The image output section 300 includes an under-sampling section 310, anti-aliasing filters 220 and 320, and a Bayer interpolation section 330 (demosaicing section). Note that the same elements as those described above with reference to FIG. 11 are indicated by identical reference signs, and description of these elements is appropriately omitted.

As illustrated in FIG. 20, a low-resolution movie (e.g., 3 Mpixels) acquired by the imaging operation is subjected to the Bayer interpolation process (demosaicing process) by the Bayer interpolation section 170, and buffered in the frame buffer 180. The movie that has been buffered in the frame buffer 180 is compressed by the data compression section 190, and recorded in the data recording section 140.

When playing the recorded data, the movie is decompressed by the data decompression section 260. The decompressed movie is under-sampled by the under-sampling section 310, subjected to the anti-aliasing process by the anti-aliasing filter 320, and played as a High-Vision movie (2 Mpixels).

The user designates the desired high-resolution still image acquisition target frame of the High-Vision movie. The user designates the high-resolution still image acquisition target frame using the frame selection section 280 (e.g., user interface such as a touch panel), and information about the designated frame is input to the frame buffer 270. The low-resolution image at the designated frame is stored in the frame buffer 270. The low-resolution image is an image obtained by the Bayer interpolation process. The light-receiving values (pixel values) used for the estimation process are extracted by the estimation pixel summation/extraction section 290. The extracted light-receiving values are subjected to the interpolation process by the interpolation section 200, and subjected to the estimation process by the pixel value estimation calculation section 210. The estimated pixel values are subjected to the Bayer interpolation process (demosaicing process) by the Bayer interpolation section 330, subjected to the anti-aliasing process by the anti-aliasing filter 220, and output as a high-resolution still image (12 Mpixels).

9. Fourth estimated pixel value estimation method (weighted summation)

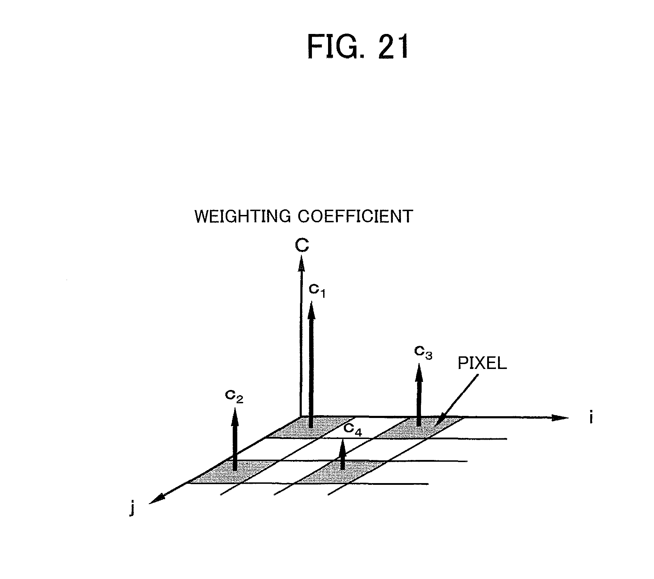

Although an example in which the pixel values of the pixels included in each light-receiving unit are simply summed up and read thereafter has been described above, the pixel values of the pixels included in each light-receiving unit may be summed up with weighting (weighted summation process) and read thereafter, and the estimated pixel values may be calculated from the resulting light-receiving values. A fourth estimated pixel value estimation method that performs the weighted summation process is described below with reference to FIGS. 21 to 28. The following description illustrates an example in which the estimation process is performed on the G1 pixels of the Bayer array. Note that the following estimation process can also be applied to the G2 pixels, the R pixel, and the B pixels.

As illustrated in FIG. 21, weighting coefficients used for the addition readout process are referred to as $c_1$, $c_2$, $c_3$, and $c_4$. When $c_1=1$, the weighting coefficients have the relationship shown by the following expression (20) ($r$ is a real number larger than 1).

$$c_1=1, \ c_2=1/r, \ c_3=1/r, \ c_4=1/r^2 \qquad (20)$$

The following description illustrates an example in which $r=2$ (see the following expression (21)) for convenience of explanation.

$$c_1=1, \ c_2=1/2, \ c_3=1/2, \ c_4=1/4 \qquad (21)$$

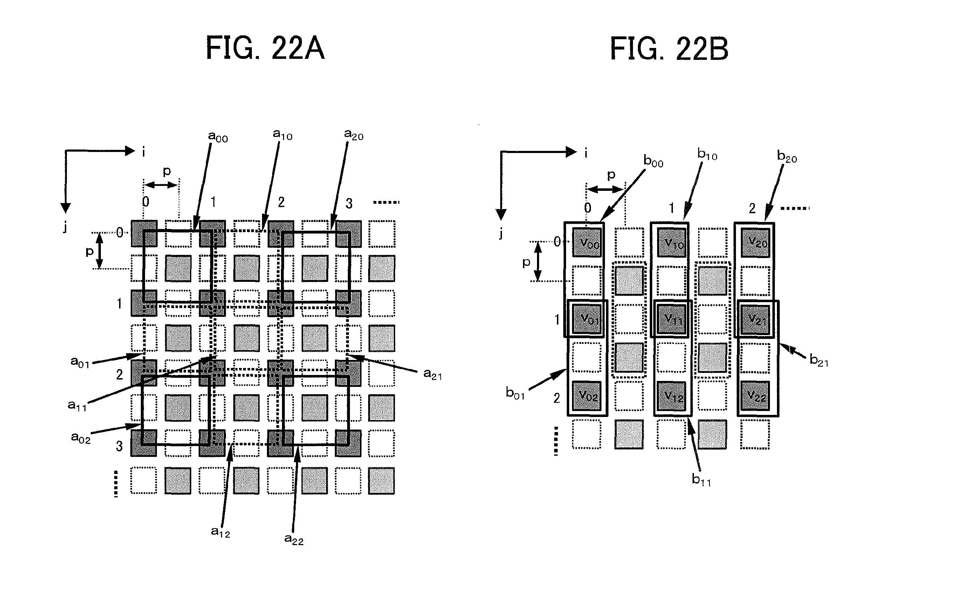

As illustrated in FIG. 22A, the light-receiving values $a_{00}$, $a_{20}$, ... are acquired by the imaging operation, and the light-receiving values $a_{10}$, ..., $a_{01}$, $a_{11}$, ... are calculated by the interpolation process. As illustrated in FIG. 22B, the intermediate pixel values $b_{00}$, $b_{10}$, ... are calculated from the light-receiving values, and the estimated pixel values $v_{00}$, $v_{10}$, ... are calculated from the intermediate pixel values $b_{00}$, $b_{10}$, .... In FIGS. 22A and 22B, the suffix "ij" differs from that illustrated in FIGS. 14A and 14B for convenience of explanation.

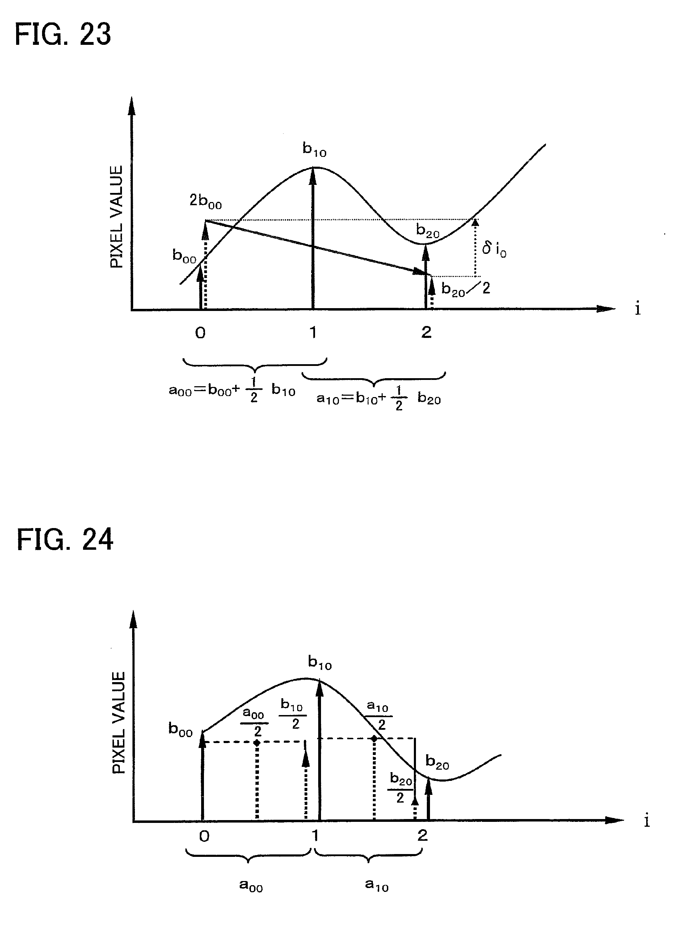

The intermediate pixel values are estimated as described below. When the weighted pixel sum values in the first row (arranged in the horizontal direction) are referred to as $a_{00}$, $a_{10}$, and $a_{20}$ in the shift order, the following expression (22) is satisfied (see FIG. 23).

$$a_{00}=c_1 v_{00}+c_2 v_{01}+c_3 v_{10}+c_4 v_{11}$$

$$a_{10}=c_1 v_{10}+c_2 v_{11}+c_3 v_{20}+c_4 v_{21} \qquad (22)$$

The intermediate pixel values $b_{00}$, $b_{10}$, and $b_{20}$ are defined as shown by the following expression (23), and the expression (21) is substituted into the expression (23).

$$b_{00}=c_1 v_{00}+c_2 v_{01}=v_{00}+(1/2)v_{01},$$

$$b_{10}=c_1 v_{10}+c_2 v_{11}=v_{10}+(1/2)v_{11},$$

$$b_{20}=c_1 v_{20}+c_2 v_{21}=v_{20}+(1/2)v_{21} \qquad (23)$$

Transforming the expression (22) using the expressions (21) and (23) yields the following expression (24).

$$a_{00}=v_{00}+(1/2)v_{01}+(1/2)v_{10}+(1/4)v_{11}=b_{00}+(1/2)b_{10},$$

$$a_{10}=v_{10}+(1/2)v_{11}+(1/2)v_{20}+(1/4)v_{21}=b_{10}+(1/2)b_{20} \qquad (24)$$

Multiplying the pixel values $a_{00}$ and $a_{10}$ in the expression (24) by a given coefficient (given weighting coefficient), calculating the difference $\delta i_0$, and transforming the expression using the expression (23) yields the following expression (25).

$$\delta i_0=a_{10}-2a_{00}$$

$$=(1/2)v_{20}+(1/4)v_{21}-(2v_{00}+v_{01})$$

$$=(1/2)b_{20}-2b_{00} \qquad (25)$$

The intermediate pixel values $b_{10}$ and $b_{20}$ can be calculated as a function of the intermediate pixel value $b_{00}$ where the intermediate pixel value $b_{00}$ is an unknown (see the following expression (26)).

$$b_{00}=(\text{unknown}),$$

$$b_{10}=2(a_{00}-b_{00}),$$

$$b_{20}=4b_{00}+2\delta i_0=4b_{00}+2(a_{10}-2a_{00}) \qquad (26)$$

A high-resolution intermediate pixel value combination pattern $\{b_{00}, b_{10}, \text{and } b_{20}\}$ is thus calculated where the intermediate pixel value $b_{00}$ is an unknown (initial variable). Likewise, an intermediate pixel value combination pattern $\{b_{01}, b_{11}, \text{and } b_{21}\}$ (second row) and an intermediate pixel value combination pattern $\{b_{02}, b_{12}, \text{and } b_{22}\}$ (third row) are calculated where the intermediate pixel value $b_{01}$ or $b_{02}$ is an unknown.

The unknown ($b_{00}$) is calculated as described below. As illustrated in FIG. 24, the light-receiving value pattern $\{a_{00}, a_{10}\}$ is compared with the intermediate pixel value pattern $\{b_{00}, b_{10}, b_{20}\}$. An unknown ($b_{00}$) that minimizes an error between the light-receiving value pattern $\{a_{00}, a_{10}\}$ and the intermediate pixel value pattern $\{b_{00}, b_{10}, b_{20}\}$ is derived, and set as the intermediate pixel value $b_{00}$.

The light-receiving values $\{a_{00}, a_{10}\}$ are the sum of adjacent values among the intermediate pixel values $\{b_{00}, b_{10}, b_{20}\}$ that are weighted using a different weighting coefficient (see the expression (24)). Therefore, a correct estimated value cannot be obtained when these values are merely compared. In order to deal with this problem, these values are compared after weighting the intermediate pixel values (see FIG. 24). More specifically, since the intermediate pixel values $\{b_{ij}, b_{(i+1)j}\}$ are weighted using $c_3=c_1/2$ and $c_4=c_2/2$, the following expression (27) is satisfied.

$$a_{ij}=b_{ij}+(1/2)b_{(i+1)j} \qquad (27)$$

The evaluation function Ej shown by the following expression (28) is calculated taking account of the weighting shown by the expression (27). The similarity between the light-receiving value pattern $\{a_{00}, a_{10}\}$ and the intermediate pixel value pattern $\{b_{00}, b_{10}, b_{20}\}$ is evaluated using the evaluation function Ej.

$$e_{ij} = (\frac{a_{ij}}{2} - b_{ij})^2 + (\frac{a_{ij}}{2} - \frac{b_{(i+1)j}}{2})^2,$$

$$Ej = \sum_{i=0}^{1} e_{ij} \qquad \cdot \ \cdot \ \cdot \ (28)$$

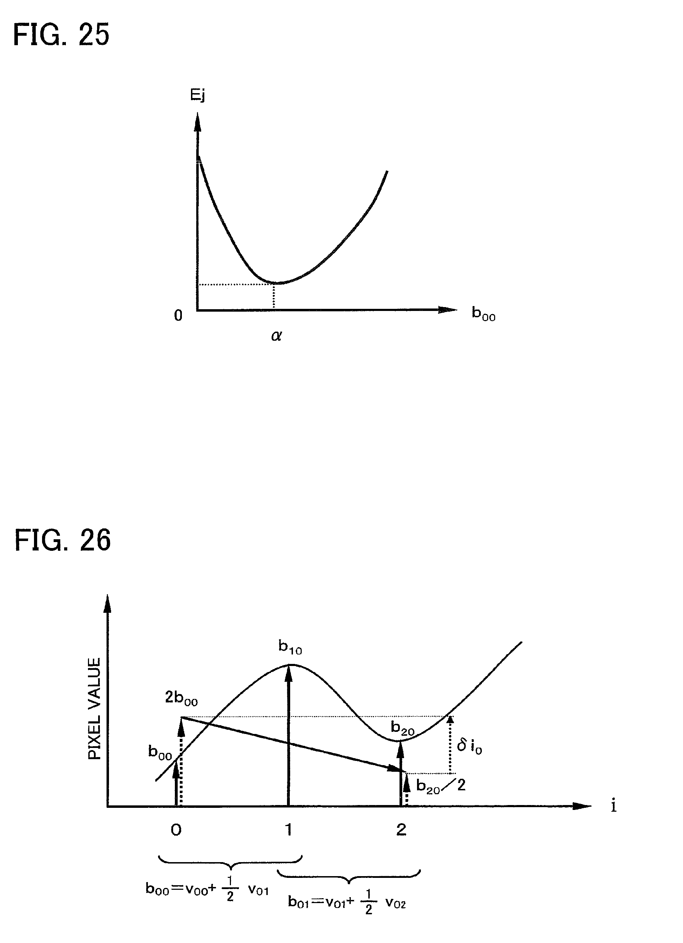

The evaluation function Ej is expressed by a function using the intermediate pixel value $b_{00}$ as an initial variable (see the expression (26)). Therefore, an unknown ($b_{00}$) ($=\alpha$) that minimizes the value of the evaluation function Ej is calculated to determine the intermediate pixel value $b_{00}$ (see FIG. 25). The estimated intermediate pixel value $b_{00}$ is substituted into the expression (26) to determine the intermediate pixel values $b_{10}$ and $b_{20}$. Since the range of the intermediate pixel value $b_{00}$ is $0 \le b_{00} \le a_{00}$, the minimum value of the evaluation function Ej is calculated within this range. Likewise, the intermediate pixel value combination pattern $\{b_{01}, b_{11}, and \ b_{21}\}$ (second row) and the intermediate pixel value combination pattern $\{b_{02}, b_{12}, and \ b_{22}\}$ (third row) are calculated where the intermediate pixel value $b_{01}$ or $b_{02}$ is an unknown.

The final estimated pixel values $v_{ij}$ are calculated as described below using the calculated intermediate pixel values $b_{ij}$. The following description is given taking the leftmost column (i=0) illustrated in FIG. 22B as an example for convenience of explanation. As illustrated in FIG. 26, the intermediate pixel values $\{b_{01}, b_{01}, b_{02}\}$ and the final estimated pixel values $\{v_{00}, v_{01}, v_{02}\}$ have the relationship shown by the following expression (29).

$$b_{00}=c_1v_{00}+c_2v_{01}=v_{00}+(1/2)v_{01},$$

$$b_{01}=c_1v_{01}+c_2v_{02}=v_{01}+(1/2)v_{02} \qquad (29)$$

Multiplying the intermediate pixel values $b_{00}$ and $b_{01}$ by a given coefficient, and calculating the difference $\delta j_0$ yields the following expression (30).

$$\delta j_0=b_{01}-2b_{00}$$

$$=(v_{01}+(1/2)v_{02})-(2v_{00}+v_{01})$$

$$=(1/2)v_{02}-2v_{00} \qquad (30)$$

The final estimated pixel values $v_{01}$ and $v_{02}$ are calculated as a function of the estimated pixel value $v_{00}$ using the expressions (29) and (30) where the estimated pixel value $v_{00}$ is an unknown (initial variable). The function is shown by the following expression (31).

$$v_{00}=(\text{unknown}),$$

$$v_{01}=2(b_{00}-v_{00}),$$

$$v_{02}=4v_{00}+2\delta j_0=4v_{00}+2(b_{01}-2b_{00}) \qquad (31)$$

The estimated pixel value pattern $\{v_{00}, v_{01}, v_{02}\}$ (see the expression (31)) is compared with the intermediate pixel value pattern $\{b_{00}, b_{01}\}$, and the unknown $(v_{00})$ is derived so that the error $Ei$ becomes a minimum. Since the final estimated pixel values $\{v_{ij}, v_{(i+1)j}\}$ are weighted using $c_2=c_1/2$, the following expression (32) is satisfied.

$$b_{ij}=v_{ij}+(1/2)v_{i(j+1)} \qquad (32)$$

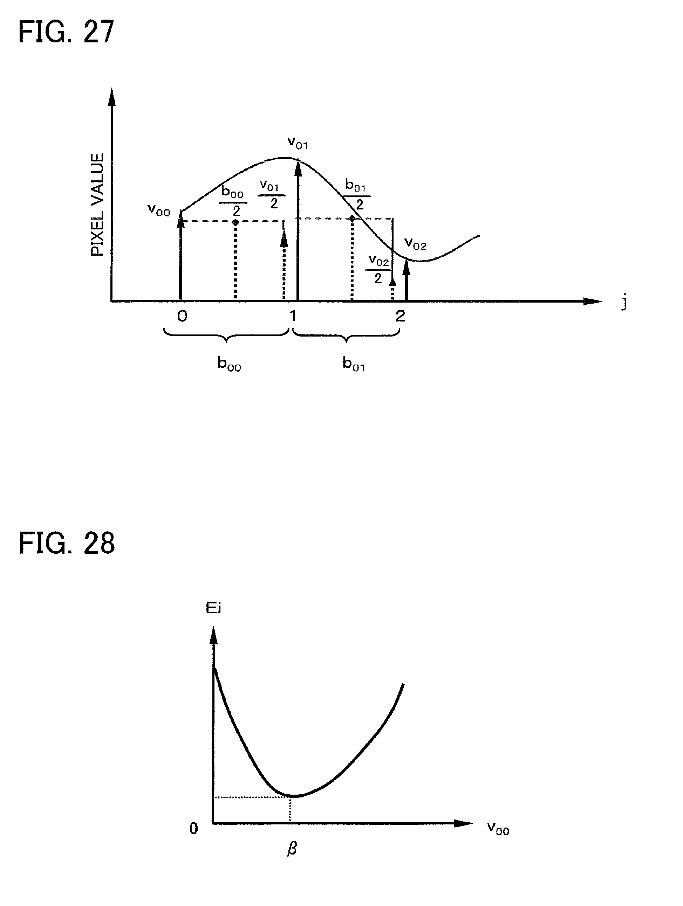

As illustrated in FIG. 27, the patterns are compared taking account of the weighting shown by the expression (32). More specifically, the evaluation function $Ej$ shown by the following expression (33) is calculated.

$$e_{ij}=(\frac{b_{ij}}{2}-v_{ij})^2+(\frac{b_{ij}}{2}-\frac{v_{i(j+1)}}{2})^2,$$

$$Ei=\sum_{j=0}^{1}e_{ij} \qquad \cdot \quad \cdot \quad \cdot \quad (33)$$

An unknown $(v_{00})$ $(=\beta)$ at which the value of the evaluation function $Ei$ becomes a minimum is calculated (see FIG. 28), and the estimated pixel value $v_{00}$ is substituted into the expression (31) to calculate the final estimated pixel values $v_{01}$ and $v_{02}$. Likewise, the final estimated pixel value combination pattern $\{v_{10}, v_{11}, v_{12}\}$ (second row) is calculated where the estimated pixel value $v_{10}$ is an unknown.

According to the above estimation method, the light-receiving units may be set to include a plurality of pixels of the image sensor (see FIG. 22A), and the pixel values of each light-receiving unit may be summed up with weighting, and read as the light-receiving values of the light-receiving units (e.g., $a_{00}=c_1v_{00}+c_2v_{01}+c_3v_{10}+c_4v_{11}$). The estimation calculation section (e.g., pixel value estimation calculation section 210 illustrated in FIG. 20) may estimate the pixel value (e.g., $v_{00}$) of each pixel of the light-receiving units based on the resulting light-receiving values (e.g., $a_{00}$) of the light-receiving units and the light-receiving values (e.g., $a_{10}$) of the virtual light-receiving units obtained by the interpolation process.

This makes it possible to acquire a low-resolution frame image by subjecting the pixel values of each light-receiving unit to the weighted summation process, and estimate the pixel values of a high-resolution frame image from the acquired low-resolution frame image. This makes it possible to improve the reproducibility of the high-frequency components of the object when performing the estimation process. Specifically, when the pixel values of each light-receiving unit are merely summed up, a rectangular window function is used for a convolution. On the other hand, when subjecting the pixel values of each light-receiving unit to the weighted summation process, a window function that contains a large amount of high-frequency components as compared with a rectangular window function is used for a convolution. This makes it possible to acquire a low-resolution frame image that contains a large amount of the high-frequency components of the object, and improve the reproducibility of the high-frequency components in the estimated image.

Note that the pixel values of each light-receiving unit may be simply summed up, and read as the light-receiving values of the light-receiving units (e.g., $a_{00}=v_{00}+v_{01}+v_{10}+v_{11}$), and the pixel value (e.g., $v_{00}$) of each pixel of each light-receiving unit may be estimated based on the light-receiving value (e.g., $a_{00}$) of each light-receiving unit obtained by the addition readout process.

10. Fifth estimated pixel value estimation method

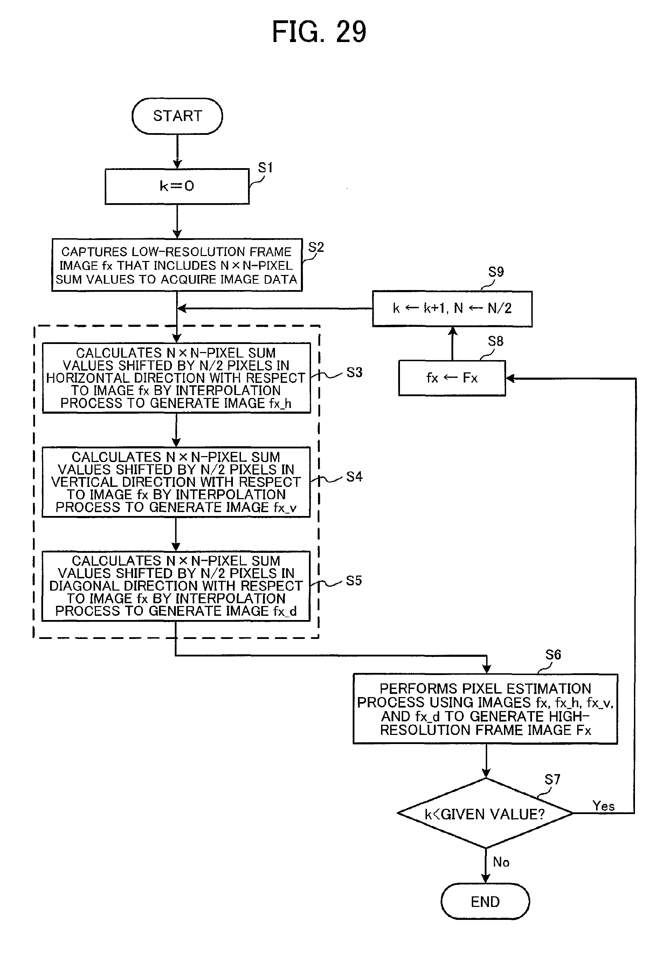

Although an example in which the process that estimates the estimated pixel values is performed once has been described above, the estimation process that increases the number of pixels by a factor of 4 may be repeated a plurality of times to estimate the estimated pixel values. A fifth estimated pixel value estimation method that repeats the estimation process is described below with reference to FIG. 29. Note that the process illustrated in FIG. 29 (flowchart) may be implemented by executing a program, or may be implemented by hardware.

In a step S1, k is set to 0 (k is an integer equal to or larger than 0). A low-resolution frame image fx that includes N×N-pixel sum values (N is a natural number) is acquired (step S2).

N×N-pixel sum values shifted by N/2 pixels in the horizontal direction with respect to the image fx are calculated by the interpolation process to generate an image fx_h (step S3). N×N-pixel sum values shifted by N/2 pixels in the vertical direction with respect to the image fx are calculated by the interpolation process to generate an image fx_v (step S4). N×N-pixel sum values shifted by N/2 pixels in the diagonal direction (horizontal direction and vertical direction) with respect to the image fx are calculated by the interpolation process to generate an image fx_d (step S5).

The estimation process is performed using the images fx, fx_h, fx_v, and fx_d to generate a high-resolution frame image Fx (step S6). When k is smaller than a given value (step S7, Yes), the generated image Fx is set to the image fx (step S8). k is incremented, and N/2 is substituted for N (step S9). The steps S3 to S6 are then repeated. The process ends when k has reached the given value (step S7, No). Note that the given value indicates the number of times that the steps S3 to S6 are repeated, and is a value that corresponds to the resolution of the estimated pixels. For example, when estimating one estimated pixel from 4×4 (=N×N) pixels of the shot image, the given value is 2, and the steps S3 to S6 are repeated twice.

According to the above estimation method, the light-receiving units may be set to include N×N pixels (see the step S2), and the pixel values of the N×N pixels may be summed up, and read to acquire the light-receiving value (image fx) of each N×N-pixel light-receiving unit. The interpolation section (e.g., interpolation section 200 illustrated in FIG. 11) may calculate the light-receiving value (images fx_h, fx_v, and fx_d) of each N×N-pixel virtual light-receiving unit shifted by N/2 pixels by performing the interpolation process (steps S3 to S5). The estimation calculation section (pixel value estimation calculation section 210) may estimate the light-receiving value (image Fx) of each N/2×N/2-pixel light-receiving unit based on the light-receiving value (image fx) of each N×N-pixel light-receiving unit and the light-receiving value (images fx_h, fx_v, and fx_d) of each N×N-pixel virtual light-receiving unit (step S6).

The interpolation section may calculate the light-receiving value (images fx_h, fx_v, and fx_d) of each N/2×N/2-pixel virtual light-receiving unit shifted by N/4 pixels with respect to each N/2×N/2-pixel light-receiving unit by performing the interpolation process (steps S7 to S9 and S3 to S5). The estimation calculation section may estimate the light-receiving value (image Fx) of each N/4×N/4-pixel light-receiving unit based on the light-receiving value (image fx) of each N/2×N/2-pixel light-receiving unit and the light-receiving value (images fx_h, fx_v, and fx_d) of each N/2×N/2-pixel virtual light-receiving unit.

This makes it possible to gradually increase the resolution to the desire resolution by repeating the estimation process that decreases the number of pixels included in each light-receiving unit by a factor of 1/2×1/2. Therefore, it is possible to simplify the process as compared with the case where the estimation process that decreases the number of pixels included in each light-receiving unit by a factor of 1/N×1/N is performed once. For example, when estimating a 1×1-pixel estimated pixel from a 4×4-pixel light-receiving unit, three unknowns are included in the relational expression of the intermediate pixel values, so that a complex process is required to estimate the unknowns. According to the above estimation process, since the number of unknowns is one in each estimation process, the unknown can be easily determined.

11. Sixth estimated pixel value estimation method

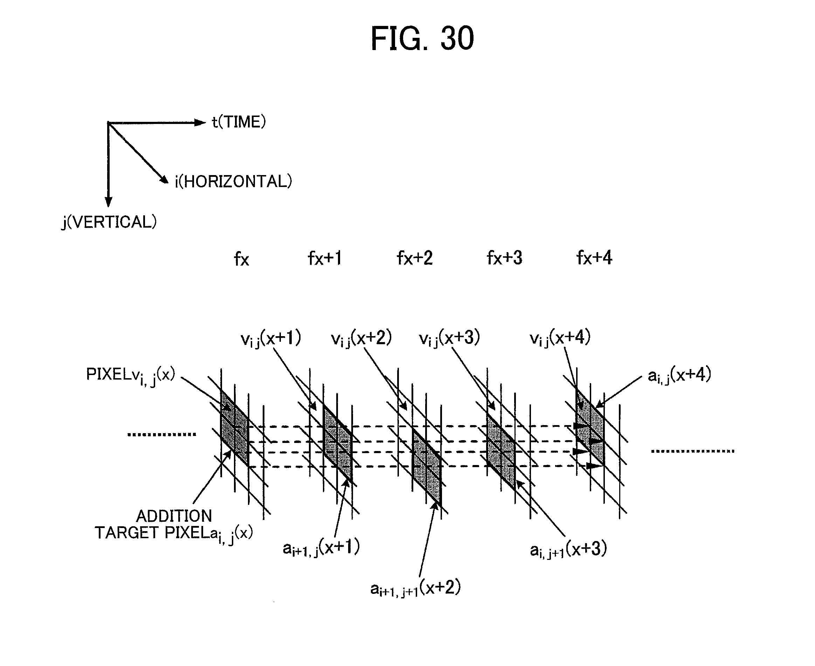

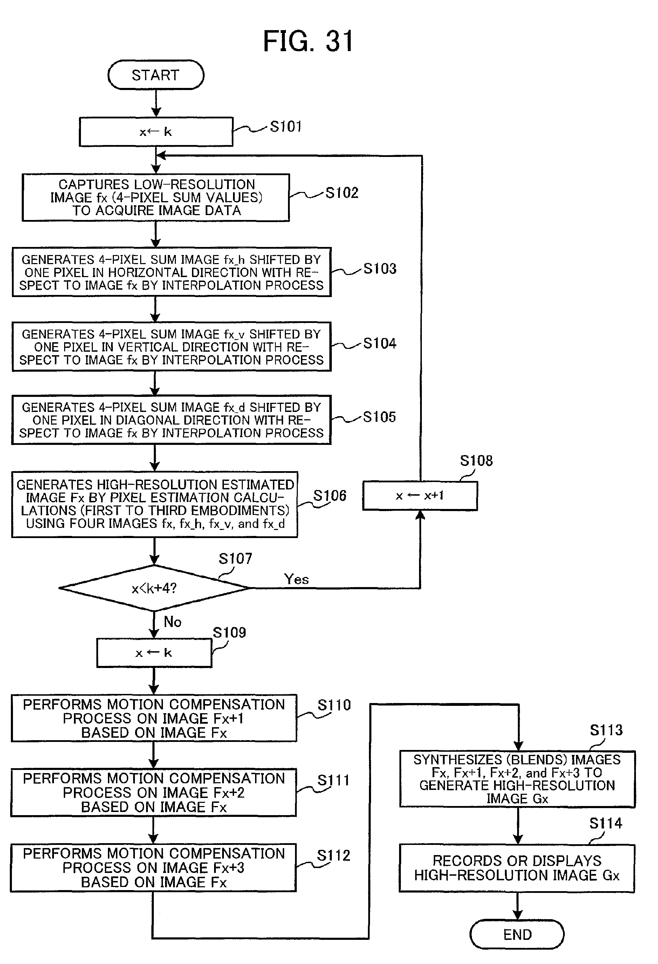

Although an example in which a pixel shift process is not performed when performing the addition readout process has been described above, the addition readout process may be performed while performing a pixel shift process, and a plurality of estimated images may be synthesized (blended) to generate a frame image that has a higher resolution. A sixth estimated pixel value estimation method that performs the addition readout process while performing the pixel shift process is described below with reference to FIGS. 30 and 31.

As illustrated in FIG. 30, the light-receiving value $a_{ij}(x)$ is acquired in the frame fx, and the light-receiving value $a_{i+1,j}(x+1)$ (i.e., shifted by one pixel) is acquired in the frame fx+1. The light-receiving value $a_{ij}(x)$ is acquired in the frame fx+4. The interpolation process and the estimation process are performed in each frame using the acquired light-receiving values to obtain a high-resolution estimated image in each frame. A motion compensation process is performed on four high-resolution estimated images (four frames) (one pixel shift cycle), and the resulting high-resolution estimated images are synthesized (blended) to output the final high-resolution frame image. The high-resolution estimated images are synthesized (blended) by calculating the average pixel value of each pixel of the four high-resolution estimated images subjected to the motion compensation process. The high-resolution frame image may be output every four frames, or may be output every frame.

FIG. 31 illustrates a detailed flowchart of the estimation process. A frame number k is set to the processing target frame number x (step S101), and a low-resolution frame image fx is acquired (step S102). Images fx_h, fx_v, and fx_d that are shifted by one pixel with respect to the image fx are calculated by the interpolation process (steps S103 to S105), a high-resolution estimated image Fx is estimated based on the images fx, fx_h, fx_v, and fx_d (step S106).

When the number of generated high-resolution estimated images Fx is less than 4 (step S107, Yes), the frame number x is incremented (step S108), and the steps S102 to S106 are repeated.

When the number of generated high-resolution estimated images Fx is 4 (step S107, No), the frame number k is set to the frame number x (step S109). The motion compensation process is performed on the high-resolution estimated images Fx+1, Fx+2, and Fx+3 based on the high-resolution estimated image Fx (steps S110 to S 112). The high-resolution estimated images Fx, Fx+1, Fx+2, and Fx+3 subjected to the motion compensation process are synthesized (blended) to output a high-resolution frame image Gx (step S113). The high-resolution frame image Gx is stored in a storage device, or displayed on a display device (step S 114), and the process ends.

According to the above estimation method, the pixel shift process that shifts the light-receiving units so that overlap occurs may be performed in each frame (fx, fx+1, ...), the light-receiving unit is sequentially set at a plurality of positions $a_{ij}(x)$, $a_{i+1,j}(x+1)$, ... by the pixel shift process. The light-receiving unit may be set at an identical position $a_{ij}(x)$ and $a_{ij}(x+4)$ every multiple frames (every four frames (fx to fx+3)).

The interpolation section (e.g., interpolation section 200 illustrated in FIG. 11) may calculate the light-receiving values $a_{i+1,j}(x)$, $a_{i+2,j}(x+1)$, ... of the virtual light-receiving units in each frame by the interpolation process based on the low-resolution frame image acquired in each frame. The estimation calculation section (pixel value estimation calculation section 210) may estimate the estimated pixel values $v_{ij}(x)$, $v_{ij}(x+1)$, ... in each frame based on the light-receiving value of the light-receiving unit and the light-receiving values of the virtual light-receiving units. The image output section (image output section 300) may calculate the frame image (high-resolution estimated image) in each frame based on the estimated pixel values $v_{ij}(x)$, $v_{ij}(x+1)$, ..., and may synthesize (blend) the frame images in a plurality of frames (fx to fx+3) to output a high-resolution frame image.

According to the above configuration, the high-resolution frame image is estimated from a plurality of low-resolution frame image acquired performing the pixel shift process in each frame. Since high-frequency components due to the pixel shift process can be added, the reproducibility of the high-frequency components of the image can be improved as compared with the case where the pixel shift process is not performed.

## 12. Seventh estimated pixel value estimation method

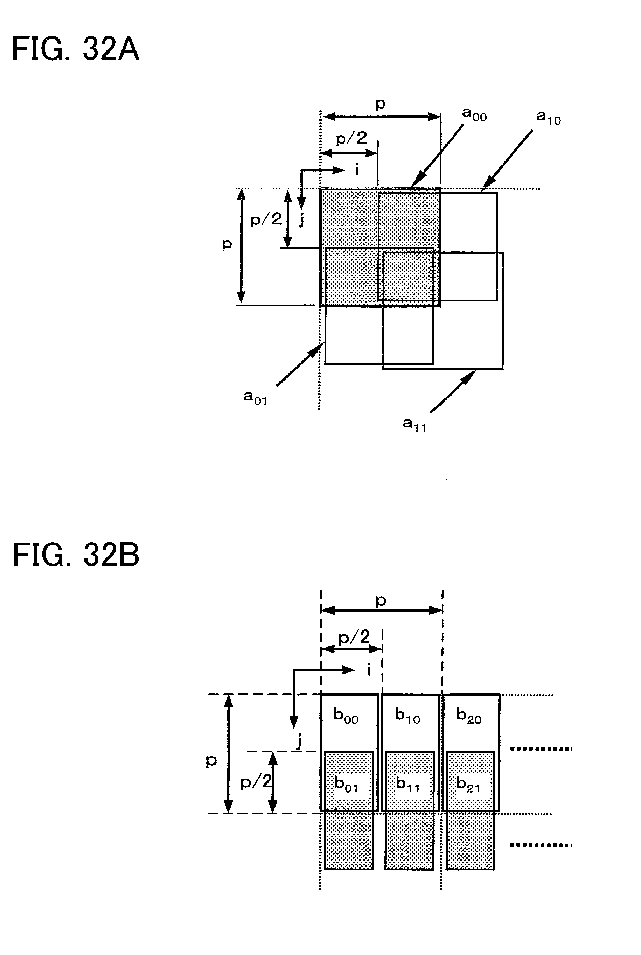

The above embodiments have been described taking an example in which the light-receiving unit includes a plurality of pixels, and an image that has a resolution equal to that of the image sensor is estimated from the light-receiving value of the light-receiving unit, the light-receiving unit may include one pixel, and an image that has a resolution (number of pixels) higher (larger) than that of the image sensor may be estimated. A seventh estimated pixel value estimation method that estimates such an image is described below with reference to FIGS. 32A and 32B.

As illustrated in FIG. 32A, the pixel pitch of the image sensor is p, and the light-receiving units are set every pixel at a pitch of p. Specifically, the light-receiving value of each light-receiving unit is the pixel value of the pixel set as each light-receiving unit. The light-receiving value $a_{00}$ is read from the light-receiving unit, and the light-receiving values $a_{10}$, $a_{01}$, and $a_{11}$ of the virtual light-receiving units are calculated by the interpolation process. The estimated pixel values corresponding to the pixels at a pitch of p/2 are estimated from the light-receiving values $a_{00}$, $a_{10}$, $a_{01}$, and $a_{11}$ to calculate a high-resolution frame image. This high-resolution process may be applied when increasing the resolution of a digital zoom image or a trimmed image, for example.

FIG. 32B is a view illustrating the intermediate pixels. As illustrated in FIG. 32B, the intermediate pixel values $b_{00}$ to $b_{21}$ are estimated from the light-receiving values $a_{00}$ to $a_{11}$. The pixel pitch of the intermediate pixel values $b_{00}$ to $b_{21}$ in the horizontal direction (or the vertical direction) is p/2. The intermediate pixel values $b_{00}$ to $b_{21}$ and the final estimated pixel values are estimated in the same manner as described above.

## 13. Third configuration example of imaging device and image processing device

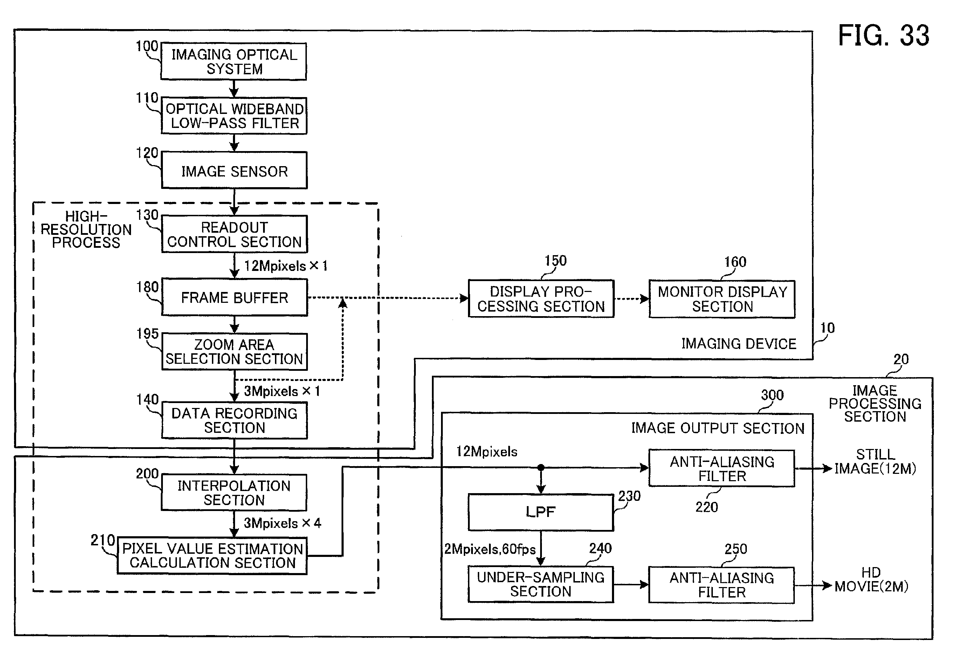

FIG. 33 illustrates a third configuration example of an imaging device and an image processing device when performing the high-resolution process on a digital zoom image. An imaging device 10 illustrated in FIG. 33 includes an imaging optical system 100, an optical wideband low-pass filter 110, an image sensor 120, a readout control section 130, a data recording section 140, a display processing section 150, a monitor display section 160, a frame buffer 180, and a zoom area selection section 195. An image processing device 20 illustrated in FIG. 33 includes an interpolation section 200, a pixel value estimation calculation section 210, and an image output section 300. The image output section 300 includes anti-aliasings filters 220 and 250, a low-pass filter 230, and an under-sampling section 240. Note that the same elements as those described above with reference to FIG. 11 and the like are indicated by identical reference signs, and description thereof is appropriately omitted.

As illustrated in FIG. 33, the light-receiving unit is set to one pixel by the readout control section 130, and the pixel values of the image sensor 120 (e.g., 12 Mpixels) are read to acquire a captured image (12 Mpixels). A zoom area is set to the captured image, and the image (3 Mpixels) in the zoom area is acquired as a low-resolution frame image.

The zoom area is selected by the user via a user interface (not illustrated in FIG. 33), for example. The low-resolution frame image is stored in the data recording section 140. The interpolation process and the estimation process are performed on the low-resolution frame image read from the data recording section 140 to calculate an estimated image (12 Mpixels). The image output section 300 generates a high-resolution still image (12 Mpixels) or a High-Vision movie (2 Mpixels) from the estimated image.

Although some embodiments of the invention have been described in detail above, those skilled in the art would readily appreciate that many modifications are possible in the embodiments without materially departing from the novel teachings and advantages of the invention. Accordingly, such modifications are intended to be included within the scope of the invention. Any term (e.g., pixel-sum value, interpolated light-receiving unit, or intermediate estimated pixel value) cited with a different term having a broader meaning or the same meaning (e.g., light-receiving unit, virtual light-receiving unit, or intermediate pixel value) at least once in the specification and the drawings can be replaced by the different term in any place in the specification and the drawings. The configurations and the operations of the interpolation section, the estimation calculation section, the image output section, the imaging device, the image processing device, and the like are not limited to those described in connection with the above embodiments. Various modifications and variations may be made.

REFERENCE SIGNS LIST

10: imaging device, 20: image processing device, 100: imaging optical system, 110: optical wideband low-pass filter, 120: image sensor, 130: pixel addition section, 140: data recording section, 150: display processing section, 160: monitor display section, 170: bayer interpolation section, 180: frame buffer, 190: data compression section, 195: zoom area selection section, 200: interpolation section, 210: pixel value estimation calculation section, 220: anti-aliasing filter, 230: low-pass filter, 240: under-sampling section, 250: anti-aliasing filter, 260: data decompression section, 270: frame buffer, 280: frame selection section, 290: estimation pixel summation/extraction section, 300: image output section, 310: under-sampling section, 320: anti-aliasing filter, 330: bayer interpolation section, $Bk_{00}$: estimation block, $a_{00}$: light-receiving value of light-receiving unit, $a_{10}$, $a_{01}$, $a_{11}$: light-receiving value of virtual light-receiving unit, $b_{ij}$: intermediate pixel value, $v_{ij}$: estimated pixel value, $\delta i_0$: difference, Ei: evaluation function, $w_0$, $w_1$, $w_2$: weighting coefficient, fx: frame, p: pixel pitch

**Claims**

1.  An image processing device comprising:

    a storage section that stores a low-resolution frame image being acquired by reading light-receiving values of light-receiving units, the light-receiving units being units for acquiring the light-receiving values and set on an image sensor;
    an interpolation section that calculates light-receiving values of virtual light-receiving units by an interpolation process based on the light-receiving values of the light-receiving units of the low-resolution frame image, the virtual light-receiving units being set to overlap a corresponding light-receiving unit and being shifted from a position of the corresponding light-receiving unit;
    an estimation calculation section that estimates estimated pixel values at a pixel pitch smaller than that of the low-resolution frame image based on the light-receiving value of the corresponding light-receiving unit and the light-receiving values of the virtual light-receiving units; and
    an image output section that outputs a high-resolution frame image having a resolution higher than that of the low-resolution frame image based on the estimated pixel values estimated by the estimation calculation section.

2.  The image processing device as defined in claim 1,
    the estimation calculation section calculating a difference between the light-receiving value of a first light-receiving unit and the light-receiving value of a second light-receiving unit, and estimating the estimated pixel values based on the difference, the first light-receiving unit being the corresponding light-receiving unit or a virtual light-receiving unit among the virtual light-receiving units that is set at a first position, and the second light-receiving unit being a virtual light-receiving unit among the virtual light-receiving units that is set at a second position and overlaps the first light-receiving unit.

3.  The image processing device as defined in claim 2,
    the estimation calculation section expressing a relational expression of a first intermediate pixel value and a second intermediate pixel value using the difference, the first intermediate pixel value being the light-receiving value of a first light-receiving area that is obtained by removing an overlapping area from the first light-receiving unit, and the second intermediate pixel value being the light-receiving value of a second light-receiving area that is obtained by removing the overlapping area from the second light-receiving unit, and
the estimation calculation section estimating the first intermediate pixel value and the second intermediate pixel value using the relational expression, and calculating the estimated pixel values using the estimated first intermediate pixel value.

4. The image processing device as defined in claim 3,
the estimation calculation section expressing a relational expression of intermediate pixel values included in an intermediate pixel value pattern using the light-receiving value of the corresponding light-receiving unit and the light-receiving values of the virtual light-receiving units, the intermediate pixel value pattern including consecutive intermediate pixel values that include the first intermediate pixel value and the second intermediate pixel value,
the estimation calculation section comparing the intermediate pixel value pattern expressed by the relational expression and a light-receiving value pattern expressed using the light-receiving value of the corresponding light-receiving unit and the light-receiving values of the virtual light-receiving units to evaluate similarity, and
the estimation calculation section determining the intermediate pixel values included in the intermediate pixel value pattern based on a similarity evaluation result so that the similarity becomes a maximum.

5. The image processing device as defined in claim 4,
the estimation calculation section calculating an evaluation function that indicates an error between the intermediate pixel value pattern expressed by the relational expression and the light-receiving value pattern, and determining the intermediate pixel values included in the intermediate pixel value pattern so that a value of the evaluation function becomes a minimum.

6. The image processing device as defined in any one of claims 1 to 5,
the interpolation section calculating a weighted sum of the light-receiving values of a plurality of light-receiving units that are included in the low-resolution frame image and positioned around each of the virtual light-receiving units to calculate the light-receiving values of the virtual light-receiving units.

7. The image processing device as defined in any one of claims 1 to 5,
the light-receiving units being set to include a plurality of pixels of the image sensor, and pixel values of the plurality of pixels respectively included in the light-receiving units being summed up, and read as the light-receiving values of the light-receiving units, and
the estimation calculation section estimating the pixel values of the plurality of pixels respectively included in the light-receiving units based on the light-receiving values of the light-receiving units.

8. The image processing device as defined in any one of claims 1 to 5,
the light-receiving units being set to include a plurality of pixels of the image sensor, and pixel values of the plurality of pixels respectively included in the light-receiving units being summed up with weighting, and read as the light-receiving values of the light-receiving units, and
the estimation calculation section estimating the pixel values of the plurality of pixels respectively included in the light-receiving units based on the light-receiving values of the light-receiving units.

9. The image processing device as defined in any one of claims 1 to 5,
the image sensor being a color image sensor, a plurality of pixels adjacent to each other being set as the light-receiving units independently of a color of each pixel, and pixel values of the plurality of pixels set as the light-receiving units being summed up, and read to acquire the low-resolution frame image,
the estimation calculation section estimating the pixel values of each pixel of the light-receiving units based on the light-receiving values of the light-receiving units of the low-resolution frame image and the light-receiving values of the virtual light-receiving units output from the interpolation section, and
the image output section outputting a high-resolution color frame image based on the pixel values estimated by the estimation calculation section.

10. The image processing device as defined in any one of claims 1 to 5,
the image sensor being a color image sensor, a plurality of pixels in an identical color being set as the light-receiving units, and pixel values of the plurality of pixels set as the light-receiving units being summed up, and read to acquire the low-resolution frame image,
the estimation calculation section estimating the pixel value of each pixel of the light-receiving units based on the light-receiving values of the light-receiving units of the low-resolution frame image and the light-receiving values of the virtual light-receiving units output from the interpolation section, and
the image output section outputting a high-resolution color frame image based on the pixel values estimated by the estimation calculation section.

**11.** The image processing device as defined in any one of claims 1 to 5,
the light-receiving units being set to include $N \times N$ pixels, and pixel values of the $N \times N$ pixels being summed up, and read to acquire the light-receiving value of each $N \times N$-pixel light-receiving unit,
the interpolation section calculating the light-receiving value of each $N \times N$-pixel virtual light-receiving unit shifted by $N/2$ pixels with respect to each $N \times N$-pixel light-receiving unit by performing the interpolation process,
the estimation calculation section estimating the light-receiving value of each $N/2 \times N/2$-pixel light-receiving unit based on the light-receiving value of each $N \times N$-pixel light-receiving unit and the light-receiving value of each $N \times N$-pixel virtual light-receiving unit,
the interpolation section calculating the light-receiving value of each $N/2 \times N/2$-pixel virtual light-receiving unit shifted by $N/4$ pixels with respect to each $N/2 \times N/2$-pixel light-receiving unit by performing the interpolation process, and
the estimation calculation section estimating the light-receiving value of each $N/4 \times N/4$-pixel light-receiving unit based on the light-receiving value of each $N/2 \times N/2$-pixel light-receiving unit and the light-receiving value of each $N/2 \times N/2$-pixel virtual light-receiving unit.

**12.** The image processing device as defined in any one of claims 1 to 5,
a pixel shift process that shifts the light-receiving units so that overlap occurs being performed in each frame, and the corresponding light-receiving unit being sequentially set at a plurality of positions by the pixel shift process, and set at an identical position at intervals of a plurality of frames,
the interpolation section calculating the light-receiving values of the virtual light-receiving units in each frame by the interpolation process based on the low-resolution frame image acquired in each frame,
the estimation calculation section estimating the estimated pixel values in each frame based on the light-receiving value of the corresponding light-receiving unit and the light-receiving values of the virtual light-receiving units, and the image output section calculating a frame image in each frame based on the estimated pixel values, and synthesizing the frame images in the plurality of frames to output the high-resolution frame image.

**13.** The image processing device as defined in any one of claims 1 to 5,
the image output section performing a resolution conversion process on the high-resolution frame image to output a High-Vision movie, or outputting the high-resolution frame image as a high-resolution still image.

**14.** An imaging device comprising:

an image sensor;
a readout control section that acquires a low-resolution frame image by reading light-receiving values of light-receiving units, the light-receiving units being units for acquiring the light-receiving values and set on the image sensor;
a storage section that stores the low-resolution frame image acquired by the readout control section;
an interpolation section that calculates light-receiving values of virtual light-receiving units by an interpolation process based on the light-receiving values of the light-receiving units of the low-resolution frame image, the virtual light-receiving units being set to overlap a corresponding light-receiving unit and being shifted from a position of the corresponding light-receiving unit;
an estimation calculation section that estimates estimated pixel values at a pixel pitch smaller than that of the low-resolution frame image based on the light-receiving value of the corresponding light-receiving unit and the light-receiving values of the virtual light-receiving units; and
an image output section that outputs a high-resolution frame image having a resolution higher than that of the low-resolution frame image based on the estimated pixel values estimated by the estimation calculation section.

**15.** The imaging device as defined in claim 14, further comprising:

a display section; and
a display control section that displays an image on the display section,
the image output section performing a resolution conversion process on the high-resolution frame image to output a High-Vision movie, or outputting the high-resolution frame image as a high-resolution still image, and the display control section displaying a movie that includes the low-resolution frame image, displaying the High-Vision movie, and displaying the high-resolution still image.

**16.** A program that causes a computer to function as:

a storage section that stores a low-resolution frame image being acquired by reading light-receiving values of light-receiving units, the light-receiving units being units for acquiring the light-receiving values and set on an image sensor;

an interpolation section that calculates light-receiving values of virtual light-receiving units by an interpolation process based on the light-receiving values of the light-receiving units of the low-resolution frame image, the virtual light-receiving units being set to overlap a corresponding light-receiving unit and being shifted from a position of the corresponding light-receiving unit;

an estimation calculation section that estimates estimated pixel values at a pixel pitch smaller than that of the low-resolution frame image based on the light-receiving value of the corresponding light-receiving unit and the light-receiving values of the virtual light-receiving units; and

an image output section that outputs a high-resolution frame image having a resolution higher than that of the low-resolution frame image based on the estimated pixel values estimated by the estimation calculation section.

**17.** An image processing method comprising:

storing a low-resolution frame image being acquired by reading light-receiving values of light-receiving units, the light-receiving units being units for acquiring the light-receiving values and set on an image sensor;

calculating light-receiving values of virtual light-receiving units by an interpolation process based on the light-receiving values of the light-receiving units of the low-resolution frame image, the virtual light-receiving units being set to overlap a corresponding light-receiving unit and being shifted from a position of the corresponding light-receiving unit;

estimating estimated pixel values at a pixel pitch smaller than that of the low-resolution frame image based on the light-receiving value of the corresponding light-receiving unit and the light-receiving values of the virtual light-receiving units; and

outputting a high-resolution frame image having a resolution higher than that of the low-resolution frame image based on the estimated pixel values.

# FIG. 1

FIG. 2A

FIG. 2B

# FIG. 3A

# FIG. 3B

FIG. 4

FIG. 5

# FIG. 6

# FIG. 7A

# FIG. 7B

## FIG. 8

## FIG. 9

# FIG. 10

# FIG. 11

FIG. 12

# FIG. 13

FIG. 14A

FIG. 14B

EP 2 579 206 A1

## FIG. 15

## FIG. 16

# FIG. 17A

# FIG. 17B

EP 2 579 206 A1

FIG. 18

FIG. 19

EP 2 579 206 A1

# FIG. 20

100 IMAGING OPTICAL SYSTEM

110 OPTICAL WIDEBAND LOW-PASS FILTER

120 IMAGE SENSOR

130 PIXEL ADDITION SECTION

3Mpixels × 1

170 BAYER INTERPOLATION SECTION

180 FRAME BUFFER

190 DATA COMPRESSION SECTION

140 DATA RECORDING SECTION

150 DISPLAY PROCESSING SECTION

160 MONITOR DISPLAY SECTION

10

IMAGING DEVICE

260 DATA DECOMPRESSION SECTION

12Mpixels

2Mpixels,60fps

310 UNDER-SAMPLING SECTION

320 ANTI-ALIASING FILTER

HD MOVIE (2M)

270 FRAME BUFFER

280 FRAME SELECTION SECTION

290 ESTIMATION PIXEL ADDITION/EXTRACTION SECTION

200 INTERPOLATION SECTION

3Mpixels × 4

210 PIXEL VALUE ESTIMATION CALCULATION SECTION

HIGH-RESOLUTION PROCESS

330 BAYER INTER-POLATION SECTION

12Mpixels

220 ANTI-ALIASING FILTER

STILL IMAGE (12M)

IMAGE OUTPUT SECTION

300 IMAGE PROCESSING SECTION

20

44

# FIG. 21

WEIGHTING COEFFICIENT

FIG. 22A

FIG. 22B

EP 2 579 206 A1

# FIG. 23

# FIG. 24

FIG. 25

FIG. 26

FIG. 27

FIG. 28

# FIG. 29

```
                    START

                      │
                      ▼
              ┌──────────────┐  S1
              │    k = 0      │
              └──────────────┘
                      │
                      ▼
        ┌─────────────────────────────┐  S2
        │ CAPTURES LOW-RESOLUTION      │
        │ FRAME IMAGE fx THAT          │                    S9
        │ INCLUDES N × N-PIXEL SUM     │         ┌─────────────────────┐
        │ VALUES TO ACQUIRE IMAGE DATA │◄────────│ k ← k+1, N ← N/2     │
        └─────────────────────────────┘         └─────────────────────┘
                      │                                    ▲
         ┌ ─ ─ ─ ─ ─ ─│─ ─ ─ ─ ─ ─ ─ ─ ─ ─┐              │      S8
                      ▼                                   │
        │ ┌─────────────────────────────┐ │   ┌─────────────────────┐
          │ CALCULATES N × N-PIXEL SUM  │     │     fx ← Fx          │◄─────┐
        │ │ VALUES SHIFTED BY N/2 PIXELS│ │ S3 └─────────────────────┘      │
          │ IN HORIZONTAL DIRECTION WITH│                                    │
        │ │ RESPECT TO IMAGE fx BY      │ │                                  │
          │ INTERPOLATION PROCESS TO    │                                    │
        │ │ GENERATE IMAGE fx_h         │ │                                  │
          └─────────────────────────────┘                                    │
        │             │                   │                                  │
                      ▼                                                       │
        │ ┌─────────────────────────────┐ │                                  │
          │ CALCULATES N × N-PIXEL SUM  │                                     │
        │ │ VALUES SHIFTED BY N/2 PIXELS│ │ S4                               │
          │ IN VERTICAL DIRECTION WITH  │                                     │
        │ │ RESPECT TO IMAGE fx BY      │ │                                  │
          │ INTERPOLATION PROCESS TO    │                                     │
        │ │ GENERATE IMAGE fx_v         │ │                                  │
          └─────────────────────────────┘                                    │
        │             │                   │                                  │
                      ▼                                                       │
        │ ┌─────────────────────────────┐ │                                  │
          │ CALCULATES N × N-PIXEL SUM  │                                     │
        │ │ VALUES SHIFTED BY N/2 PIXELS│ │ S5                               │
          │ IN DIAGONAL DIRECTION WITH  │                                     │
        │ │ RESPECT TO IMAGE fx BY      │ │                                  │
          │ INTERPOLATION PROCESS TO    │                                     │
        │ │ GENERATE IMAGE fx_d         │ │                                  │
          └─────────────────────────────┘                                    │
        └ ─ ─ ─ ─ ─ ─ │─ ─ ─ ─ ─ ─ ─ ─ ─ ─┘                                 │
                      │                                 S6                     │
                      │                    ┌─────────────────────────────┐    │
                      └───────────────────►│ PERFORMS PIXEL ESTIMATION   │    │
                                           │ PROCESS USING IMAGES fx,    │    │
                                           │ fx_h, fx_v, AND fx_d TO     │    │
                                           │ GENERATE HIGH-RESOLUTION    │    │
                                           │ FRAME IMAGE Fx              │    │
                                           └─────────────────────────────┘    │
                                                      │                       │
                                                      ▼          S7           │
                                                   ◇─────────────◇   Yes      │
                                                   │ k<GIVEN      │───────────┘
                                                   │  VALUE?      │
                                                   ◇─────────────◇
                                                      │ No
                                                      ▼
                                                   ( END )
```

# FIG. 30

# FIG. 31

```
              ┌──────────┐
              │  START   │
              └────┬─────┘
                   ▼
           ┌───────────────┐
           │    x ← k      │────── S101
           └───────┬───────┘
                   ▼
    ┌───────────────────────────────┐
    │ CAPTURES LOW-RESOLUTION        │
    │ IMAGE fx (4-PIXEL SUM VALUES)  │──── S102
    │ TO ACQUIRE IMAGE DATA          │
    └───────────────┬───────────────┘
                    ▼
    ┌───────────────────────────────────┐
    │ GENERATES 4-PIXEL SUM IMAGE fx_h   │
    │ SHIFTED BY ONE PIXEL IN HORIZONTAL │──── S103
    │ DIRECTION WITH RESPECT TO IMAGE fx │
    │ BY INTERPOLATION PROCESS           │
    └───────────────┬───────────────────┘
                    ▼
    ┌───────────────────────────────────┐
    │ GENERATES 4-PIXEL SUM IMAGE fx_v   │
    │ SHIFTED BY ONE PIXEL IN VERTICAL   │──── S104
    │ DIRECTION WITH RESPECT TO IMAGE fx │
    │ BY INTERPOLATION PROCESS           │
    └───────────────┬───────────────────┘
                    ▼
    ┌───────────────────────────────────┐
    │ GENERATES 4-PIXEL SUM IMAGE fx_d   │
    │ SHIFTED BY ONE PIXEL IN DIAGONAL   │──── S105
    │ DIRECTION WITH RESPECT TO IMAGE fx │
    │ BY INTERPOLATION PROCESS           │
    └───────────────┬───────────────────┘
                    ▼
    ┌───────────────────────────────────┐         ┌──────────┐ S108
    │ GENERATES HIGH-RESOLUTION          │         │ x ← x+1  │
    │ ESTIMATED IMAGE Fx BY PIXEL        │── S106  └────┬─────┘
    │ ESTIMATION CALCULATIONS (FIRST TO  │            ▲
    │ THIRD EMBODIMENTS) USING FOUR      │            │
    │ IMAGES fx, fx_h, fx_v, and fx_d    │            │
    └───────────────┬───────────────────┘            │
                    ▼          S107                   │
              ◇─────────────◇      Yes                │
              ◇   x<k+4?    ◇──────────────────────────┘
              ◇─────────────◇
                    │ No       S109
                    ▼
           ┌───────────────┐
           │    x ← k      │
           └───────┬───────┘
                   ▼
```

PERFORMS MOTION COMPENSATION PROCESS ON IMAGE Fx+1 BASED ON IMAGE Fx — S110

PERFORMS MOTION COMPENSATION PROCESS ON IMAGE Fx+2 BASED ON IMAGE Fx — S111

PERFORMS MOTION COMPENSATION PROCESS ON IMAGE Fx+3 BASED ON IMAGE Fx — S112

SYNTHESIZES (BLENDS) IMAGES Fx, Fx+1, Fx+2, and Fx+3 TO GENERATE HIGH-RESOLUTION IMAGE Gx — S113

RECORDS OR DISPLAYS HIGH-RESOLUTION IMAGE Gx — S114

END

# FIG. 32A

# FIG. 32B

FIG. 33

**IMAGING DEVICE** 10

- 100 IMAGING OPTICAL SYSTEM
- 110 OPTICAL WIDEBAND LOW-PASS FILTER
- 120 IMAGE SENSOR

**HIGH-RESOLUTION PROCESS**

- 130 READOUT CONTROL SECTION → 12Mpixels × 1
- 180 FRAME BUFFER
- 195 ZOOM AREA SELECTION SECTION → 3Mpixels × 1
- 140 DATA RECORDING SECTION
- 200 INTERPOLATION SECTION → 3Mpixels × 4
- 210 PIXEL VALUE ESTIMATION CALCULATION SECTION

- 150 DISPLAY PRO-CESSING SECTION
- 160 MONITOR DISPLAY SECTION

**IMAGE PROCESSING SECTION** 20

**IMAGE OUTPUT SECTION** 300

- 12Mpixels → 220 ANTI-ALIASING FILTER → STILL IMAGE(12M)
- 230 LPF
- 2Mpixels,60fps → 240 UNDER-SAMPLING SECTION → 250 ANTI-ALIASING FILTER → HD MOVIE(2M)

<div align="center">**INTERNATIONAL SEARCH REPORT**</div>

| | International application No. |
|---|---|
| | PCT/JP2011/060501 |

| A. CLASSIFICATION OF SUBJECT MATTER |
|---|
| *G06T3/40*(2006.01)i, *H04N1/387*(2006.01)i, *H04N5/225*(2006.01)i, *H04N9/07* (2006.01)i |

According to International Patent Classification (IPC) or to both national classification and IPC

| B. FIELDS SEARCHED |
|---|
| Minimum documentation searched (classification system followed by classification symbols) |
| G06T3/40, H04N1/387, H04N5/225, H04N5/262, H04N5/335, H04N9/07 |

Documentation searched other than minimum documentation to the extent that such documents are included in the fields searched

| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

| C. DOCUMENTS CONSIDERED TO BE RELEVANT |

| Category* | Citation of document, with indication, where appropriate, of the relevant passages | Relevant to claim No. |
|---|---|---|
| X<br>Y<br>A | JP 2008-060893 A (Dainippon Printing Co., Ltd.), 13 March 2008 (13.03.2008), paragraphs [0024] to [0042]; fig. 1 to 10 & US 2008/0056618 A1 | 1,13-17<br>2,6-12<br>3-5 |
| Y | JP 2003-101724 A (Konica Corp.), 04 April 2003 (04.04.2003), paragraphs [0039] to [0048]; fig. 3 (Family: none) | 2 |
| Y | JP 11-187307 A (Canon Inc.), 09 July 1999 (09.07.1999), paragraphs [0028] to [0031], [0053] to [0055], [0067] to [0069]; fig. 2, 7, 9 & US 6650361 B1 | 6-10,12 |

[X] Further documents are listed in the continuation of Box C.　　[ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 May, 2011 (20.05.11) | 07 June, 2011 (07.06.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/060501 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2008-199581 A  (Sony Corp.),<br>28 August 2008 (28.08.2008),<br>paragraphs [0008] to [0014]; fig. 8<br>& US 2008/0170137 A1    & KR 10-2008-0067963 A<br>& CN 101227551 A | 6-10 |
| Y | WO 2004/088992 A1  (Olympus Corp.),<br>14 October 2004 (14.10.2004),<br>page 1, lines 10 to 25; fig. 15<br>& JP 4350706 B          & US 2006/0012841 A1 | 6-10 |
| Y | JP 2006-050481 A  (Fuji Xerox Co., Ltd.),<br>16 February 2006 (16.02.2006),<br>paragraph [0062]<br>(Family: none) | 11 |
| A | JP 2007-060437 A  (Canon Inc.),<br>08 March 2007 (08.03.2007),<br>entire text; all drawings<br>(Family: none) | 1-17 |
| A | JP 2001-344229 A  (Ricoh Co., Ltd.),<br>14 December 2001 (14.12.2001),<br>entire text; all drawings<br>(Family: none) | 1-17 |

Form PCT/ISA/210 (continuation of second sheet) (July 2009)

**EP 2 579 206 A1**

**Patent documents cited in the description**

- JP 2009124621 A
- JP 2008243037 A